# FASCICULE DE BREVET EUROPEEN

(11) **EP 4 502 538 B1**
(45) Date de publication et mention de la délivrance du brevet: **02.12.2026**
(21) Numéro de dépôt: 24186710.0
(22) Date de dépôt: 05.07.2024
(51) Int. Cl.: G01C 19/58

(54) **CAPTEUR À ATOMES FROIDS DE TYPE GYROMÈTRE À BIAIS CORRIGÉ**
KORRIGIERTER KALTATOMSENSOR DES GYROMETERTYPS
CORRECTED BIAS RATE GYROSCOPE COLD ATOM SENSOR

(30) Priorité: 03.08.2023 FR 2308409
(43) Date de publication de la demande: 05.02.2025
(73) Titulaire: THALES, 92190 Meudon (FR)
(72) Inventeur: WIRTSCHAFTER, Benjamin, 91767 Palaiseau (FR); DUPONT-NIVET, Matthieu, 91767 Palaiseau (FR); HELLO, Soizic, 86100 Châtellerault (FR)
(74) Mandataire: Atout PI Laplace

(56) Documents cités:
- EP-A1- 4 102 182
- US-A1- 2016 116 302
- US-A1- 2023 178 262

## Description

### DOMAINE DE L'INVENTION

La présente invention se situe dans le domaine des capteurs inertiels et plus spécifiquement des capteurs inertiels interférométriques à atomes froids intégrés sur une puce atomique. Plus particulièrement l'invention concerne des capteurs à atomes froids sur puce atomique de type gyromètre utilisant des champs microondes et le cas échéant des courants continus pour la séparation spatiale et le déplacement des deux nuages d'atomes selon deux états internes, utilisés lors de la mesure des paramètres inertiels (typiquement la vitesse de rotation).

### ETAT DE LA TECHNIQUE

De manière générale, les capteurs inertiels sont des dispositifs permettant de mesurer des paramètres physiques liés au mouvement comme des accélérations ou des vitesses angulaires, qui joints à une horloge permettent de se repérer dans l'espace. Un dispositif mesurant accélération et vitesse de rotation porte le nom de centrale inertielle ou unité de mesure inertielle (UMI).

La technologie d'interférométrie avec des atomes froids sur puce permet d'effectuer ce type de mesures inertielles, et tend à démontrer une compacité et des performances suffisantes pour son utilisation dans des domaines embarqués.

Le fonctionnement du gyromètre à atomes froids repose sur l'interférométrie, et la mesure de la différence de phase de l'interféromètre permet de remonter à une mesure de rotation.

Un interféromètre à atomes froids fait interférer deux états électroniques, dénommé premier état interne la> et un deuxième état interne |b> d'un atome, tel que du rubidium 87, dans une séquence de type Ramsey. Une séquence d'interféromètre de type Ramsey mesure une phase φ accumulée lors de la mise en œuvre de la séquence, à partir d'une mesure d'au moins une population d'un état choisi la> ou |b> (préférentiellement une mesure des deux populations pour plus de précision).

Pour rendre cet interféromètre sensible aux rotations, les deux états doivent tous deux parcourir une trajectoire fermée incluant une aire non nulle et cela dans des sens opposés pour |a> et |b>. Ainsi on ajoute dans la différence d'énergie entre les deux états un terme dépendant de l'effet Sagnac et donc de la vitesse de rotation.

On rappelle ci-dessous brièvement le principe de fonctionnement de la mesure de rotation par interférométrie, basé sur une séquence de Ramsey de type horloge, où la phase de l'interféromètre à l'issue de la séquence est proportionnelle à la différence d'énergie des deux états de l'interféromètre.

Dans le cas d'une horloge, la phase de l'interféromètre est donnée par :
${φ}_{clock} = {φ}_{a} - {φ}_{b} = \left(ω-{ω}_{ab}\right) {T}_{R}$

Avec : ${ω}_{ab} = {ω}_{0 a} - {ω}_{0 b}$
φₐ est la phase des atomes dans l'état la>, et φ_{b} celle des atomes dans l'état b>,
ω est la pulsation de l'oscillateur local,
*ℏω*_{0*a*} est l'énergie électronique du niveau la> et *ℏω*_{0*b*} est l'énergie électronique du niveau |b>.
ω_{ab} est la pulsation correspondant à la différence en énergie entre les états la> et |b>, *T_{R}* est la durée de libre évolution (temps de Ramsey).

Si pendant cette séquence, on fait en sorte que les atomes dans l'état la> et ceux dans l'état |b> décrivent chacun la même trajectoire fermée contenant une aire non nulle mais parcourue dans des sens opposés, un terme de déphasage sensible aux rotations selon la normal à cette surface apparait dû à l'effet Sagnac : l'horloge devient un gyromètre.

Si la trajectoire de l'état la>, décrit par exemple un rectangle dont la trajectoire se fait dans le sens horaire, et l'état |b>, décrit la même trajectoire mais dans le sens antihoraire alors ce déphasage est donné par : ${φ}_{rot} = {φ}_{a} - {φ}_{b} = \frac{m}{ℏ} {\int }_{0}^{{T}_{R}} \left[{Ω}_{z}\left({r}_{a}∧{v}_{a}\right)+{\left({Ω}_{z}∧{r}_{a}\right)}^{2}+a⋅{r}_{a}\right] dt - \frac{m}{ℏ} {\int }_{0}^{{T}_{R}} \left[{Ω}_{z}\left(\begin{matrix}{r}_{b} ∧ \\ {v}_{b}\end{matrix}\right)+{\left({Ω}_{z}∧{r}_{b}\right)}^{2}+a⋅{r}_{b}\right] dt$
où **Ω_{z}** est la vitesse angulaire autour de l'axe z, ***r**ₐ* et ***vₐ*** (respectivement ***r**_{b}* et ***v_{b}***) la position et la vitesse des atomes dans l'état la> (respectivement état |b>) dans le référentiel fixé au capteur et ***a*** une accélération que subi le capteur, dirigée selon l'axe de séparation des deux états et qui peut être mesurée. *m* est la masse de l'atome et ℏ la constante de Planck réduite.

Pour une trajectoire formant une boucle où chaque état revient à sa position initiale à la fin de la séquence, on peut montrer que, si **a** est constant, les termes en ***a · r*** sont égaux à 0 et que les termes **(Ω_{z}** Λ ***rₐ*)²** et **(Ω_{z}** Λ ***r_{b}***)² s'annule. Le déphasage peut alors être mis sous la forme (dans le cas où **Ω_{z}** est constant pendant *T_{R}*) :
${φ}_{rot} = \frac{m}{ℏ} {\int }_{0}^{{T}_{R}} {Ω}_{z} \left({r}_{a}∧{v}_{a}-{r}_{b}∧{v}_{b}\right) dt = \frac{4 m N {Ω}_{z} ⋅ A}{ℏ} {T}_{R}$
où ***A*** est un vecteur normal à la surface décrite par les trajectoires des deux états et dont la norme est égale à l'aire et *N* est le nombre de révolution complète qu'a parcouru chaque état.

La phase totale en sortie de l'interféromètre à l'issue de la séquence est donc :
${φ}_{tot} = {φ}_{clock} + {φ}_{rot} = \left(ω-{ω}_{ab}+\frac{4 m N {Ω}_{z} ⋅ A}{ℏ}\right) {T}_{R}$ ()

La connaissance de cette phase *φₜₒₜ* ainsi que des autres grandeurs et paramètres de la formule (1) permet de remonter à la vitesse de rotation selon l'axe z perpendiculaire au plan de la trajectoire.

On rappelle ci-dessous le principe de fonctionnement d'un gyromètre à atomes ultrafroids à base de puce atomique, qui permet de générer les nuages d'atomes ultrafroids et les trajectoires permettant la mise en œuvre de la mesure de la vitesse de rotation via la phase telle que décrite ci-dessus.

On définit par atomes ultrafroids des atomes dont la température est inférieure à 400 nanokelvins, préférentiellement à 300 nanokelvins. La température d'atomes ultrafroids thermiques est, par exemple pour des atomes de Rubidium, comprise entre 50 et 400 nanokelvins et préférentiellement entre 100 et 300 nanokelvins.

Le principe est de réaliser une trajectoire parcourue de manière contrapropagative par deux nuages d'atomes piégés magnétiquement. La réalisation et le déplacement du piège magnétique selon la trajectoire sont réalisés par des fils/éléments conducteurs et des guides microondes disposés sur et dans la puce atomique. Par exemple, le document EP4102182A1 décrit un gyroscope à atomes ultrafroids sur puce utilisant des pièges magnétiques et des guides d'ondes micro-ondes. Il emploie un capteur unique mais les nuages d'atomes peuvent être guidés le long de boucles non plane grâce à des guides d'ondes supplémentaires, et ainsi accumuler des contributions de phase provenant de directions autres que l'orthogonale au plan de la puce. Une séquence de telles boucles interférométriques permet de mesurer la vitesse de rotation autour de trois axes.

Différentes topologies d'éléments conducteurs et de guide d'onde sont connues de l'homme de l'art.

Un premier exemple est décrit dans le document US2018/0352642 illustré figure 1.

La surface de la puce définit un plan XY ou plan de mesure, normal à un axe Z

La puce 1 comprend des moyens adaptés à générer un premier piège à atomes ultrafroids T1 et un deuxième piège à atomes ultrafroids T2, un piège permettant d'immobiliser un nuage d'atomes ultrafroids 12 dans un état interne différent de l'autre piège, à une distance prédéterminée h dudit plan de mesure 13. Par exemple le piège T1 comprend les atomes dans le niveau électronique ou état la> (nuage CL1) et le piège T2 comprend des atomes dans l'état |b> (nuage CL2). Les niveaux la> et |b> sont espacés d'une fréquence *ω_{ab}*/2*π.* Par exemple dans le cas du rubidium 87 il s'agit des deux niveaux hyperfins |F=1,m-_{F}=-1> et |F=2,m-_{F}=1>, espacés d'environ 6,8 GHz.

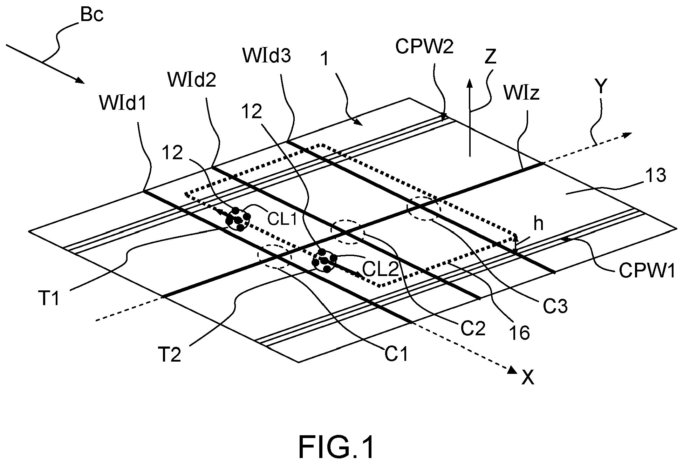

Ces moyens permettent également de déplacer les nuages selon la trajectoire 16 (également dénommée TZ) localisée dans un plan parallèle au plan de mesure 13, à une hauteur h de ce plan, tel qu'illustré figure 1. Ces moyens sont constitués de guides d'onde et de fils conducteurs.

Les guides d'onde CPW1 et CPW2 sont adaptés à la propagation de microondes à des pulsations ω_{b} et ωₐ. Les guides d'onde sont disposés symétriquement par rapport à un axe Y du plan de mesure, préférentiellement parallèles. Les deux guides d'ondes CPW1 et CPW2 sont connectés à au moins un générateur de tension ou de courant à fréquences micro-ondes. Par exemple chacun des guides d'onde est réalisé par le dépôt de trois fils conducteurs parallèles pour réaliser un guide d'onde coplanaire. Dans d'autres réalisations on peut utiliser d'autres types de guides d'onde, en particulier des guides d'onde dont la fabrication est compatible avec les techniques de micro fabrication par dépôt ou par gravure. On peut, par exemple, réaliser une ligne à microruban.

Les fils conducteurs intégrés à la puce 1 sont adaptés à être traversés par des courants continus. Les fils conducteurs sont répartis en un fil conducteur WIz selon un axe de symétrie Y perpendiculaire à X et compris dans le plan de mesure 13, et en une pluralité de n fils conducteurs Wldi, i indice variant de 1 à n, parallèles entre eux et parallèles à l'axe X, n étant au moins égal à 2. Dans l'exemple de la figure 1 n=3, soit trois fils conducteurs Wld1, WId2 et WId3. Les fils sont agencés de manière à définir n points de croisement Ci (croisement entre WIz et Wldi) localisés sur l'axe Y, ici 3 points de croisement C1, C2, C3.

Chaque fil conducteur est relié à un ou plusieurs générateurs de courant et/ou de tension, eux-mêmes reliés à une unité de traitement comportant au moins un microprocesseur. Les générateurs de tension et/ou de courant permettent de piloter aussi bien des courants continus que des courants alternatifs dans les fils. En particulier, des courants continus sont pilotés dans les fils conducteurs.

Dans le capteur, la puce à atomes 1 est placée dans une enceinte à vide entretenu, par exemple, à l'aide d'une pompe ionique et comportant préférentiellement un blindage magnétique. Le capteur comporte un dispositif de génération d'atomes ultrafroids qui comprend :
- un émetteur d'atomes (*dispenser* en anglais), par exemple réalisé par un filament chauffant délivrant une vapeur de rubidium ;
- un piège primaire à atomes (optique et/ou magnétique), permettant de pré-refroidir et de disposer un nuage d'atomes ultrafroids au voisinage de la puce, pour charger en atomes les pièges magnétiques T1 et T2 décrits ultérieurement.

Le capteur comprend également une source de champ magnétique, extérieure à la puce 1. Elle permet d'imposer un champ magnétique homogène et stationnaire Bc sur une épaisseur au moins de l'ordre d'une hauteur h au-dessus du plan de mesure 13. Avantageusement, la direction du champ magnétique homogène est parallèle au plan de mesure.

Sur la figure 1 la trajectoire 16 en pointillés illustre la trajectoire des nuages d'atomes ultrafroids 12. Cette trajectoire fermée définit une aire notée A. Une distance h sépare le plan de la trajectoire 16 et le plan de mesure 13 de la puce. Préférentiellement h est compris entre 500 nm et 1 mm, et préférentiellement entre 5 µm et 500 µm.

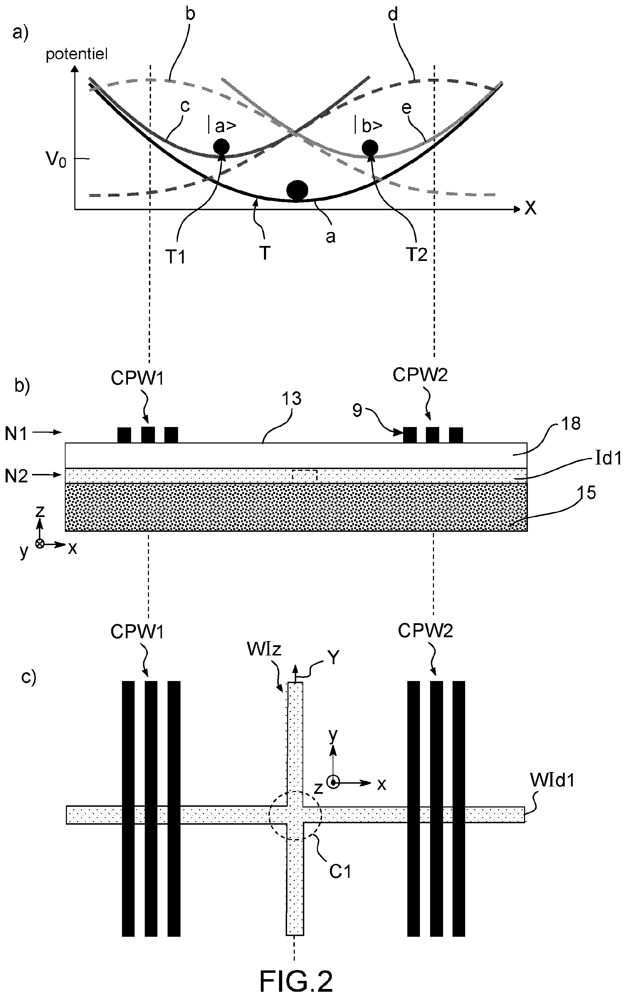

La figure 2 illustre la géométrie des guides et fils de la puce atomique ainsi que les pièges T1 et T2. L'agencement spécifique des fils conducteurs et des guides d'ondes, associé à la source de champ magnétique homogène, permet d'obtenir aisément deux pièges T1 et T2 tels qu'illustrés dans la partie a) de la figure 2. Chaque piège T1 et T2 présente une valeur du minimum V0 non nulle et identique, et une courbure identique, condition nécessaire pour que le capteur fonctionne. En effet, lorsqu'un courant continu est appliqué sur au moins deux fils conducteurs d'un point de croisement, le minimum de potentiel est localisé à la verticale de ce point de croisement. Lorsqu'ensuite une puissance hyperfréquence est envoyée dans les guides d'onde, le minimum central se transforme en deux minima de part et d'autre du minimum initial dans la direction des guides d'onde. Si le minimum initial n'est pas situé strictement à égal distance des deux guides d'ondes, les deux minima de potentiels créés n'auront pas rigoureusement la même valeur du minimum V0 et la même courbure.

La partie c) de la figure 2 illustre la disposition des fils conducteurs définissant le point de croisement initial C1 et des guides d'ondes (vue de dessus). La partie b) de la figure 2 décrit la disposition correspondante des fils conducteurs et des guides d'onde imprimés sur une puce en vue de profil, en coupe selon le fil conducteur WId1 qui croise le fil conducteur WIz selon l'axe de symétrie Y. Les guides d'onde CPW1 et CPW2 sont des guides d'onde coplanaires situés sur un premier niveau N1. La couche 18 isolante permet avantageusement d'aplanir le plan de mesure. Le matériau de la couche d'isolant électrique peut être par exemple du dioxyde de silicium, du nitrure de silicium ou benzocyclobutène. Un matériau conducteur est utilisé pour la fabrication des fils conducteurs, par exemple de l'or, et est déposé sur un substrat 15, formant un deuxième niveau N2. Le substrat peut être par exemple en silicium, en nitrure d'aluminium ou en carbure de silicium.

**On** voit sur la partie a) la séparation symétrique d'atomes ultrafroids, spécifique à l'état interne des atomes ultrafroids, et plus précisément les variations de potentiels en fonction de l'axe X de la puce 1.

La courbe « a » présente un puits de potentiel correspondant à l'association du champ magnétique homogène et du champ créé par deux fils conducteurs sécants, le fil WIz parcouru par le courant I_{Z} et le fil WId1 parcouru par le courant Id1. Il résulte un puits de potentiel local, potentiel initial Vini formant un piège atomique T selon trois dimensions. Un nuage d'atomes ultrafroids peut y être piégé et refroidis.

La courbe « b » présente de manière schématique le potentiel créé par la transmission de micro-ondes à la fréquence ω_{b} dans le guide d'onde CPW1. Le champ émis par le passage de micro-ondes à la fréquence ω_{b} permet de modifier l'énergie des atomes ultrafroids et de déplacer les atomes d'états internes |b>. La courbe « e » illustre le potentiel vu par les états internes |b> dus aux contributions des potentiels illustrés par la courbe « a » et par la courbe « b ». La courbe « e » présente un minimum local de potentiel permettant de piéger localement un nuage d'atomes ultrafroids d'états internes |b>.

De manière similaire, la courbe « d » présente de manière schématique le potentiel créé par la transmission de micro-ondes à la fréquence ωₐ dans le guide d'onde CPW2. Le champ émis par le passage de micro-ondes à la fréquence ωₐ permet de modifier l'énergie des atomes ultrafroids et de déplacer les atomes d'états internes |a>. La courbe « c » illustre le potentiel vu par les atomes d'états internes la> dû aux contributions des potentiels illustrés par la courbe « a » et par la courbe « d ». La courbe « c » présente un minimum local d'énergie permettant de piéger localement un nuage d'atomes ultrafroids d'états internes |a>.

L'association d'un piège magnétique DC (créé par les courants continus dans les fils et le champ homogène Bc) et d'un champ micro-onde créé ce qu'on appelle un piège « habillé ». On entend par « habillé » un piège créé au moins en partie par un champ oscillant micro-onde, radio-fréquence ou optique. Les changements des champs micro-ondes (puissance, fréquence et guide dans lequel ils se propagent) permettent de déplacer ce piège habillé et donc de déplacer les atomes. Le piège magnétique DC est représenté sur la figure 2 par la courbe a. Le champ micro-onde à ωₐ est représenté sur la figure 2 par la courbe d et le champ micro-onde à ω_{b} est représenté sur la figure 2 par la courbe b. Le piège habillé T1 (association des courbes a et d pour l'état la> est représenté par la courbe c et le piège habillé T2 (association des courbes a et b) pour l'état |b> est représenté par la courbe e.

Les nuages d'atomes ultrafroids d'états internes la> et |b> peuvent être séparés et piégés de manière symétrique par rapport à l'axe de symétrie Y en imposant simultanément la propagation d'ondes de fréquence ωₐ dans CPW2 et ω_{b} dans CPW1. Pour obtenir deux pièges dont les minima sont de même valeur V0 et dont les courbures sont de même valeur, il est important que le point de croisement C1 soit disposé à égal distance de CPW1 et CPW2, sur l'axe de symétrie Y.

Les fréquences ωₐ et ω_{b} sont choisies en fonction des fréquences des états la> et |b> ω₀ₐ et ω_{0b}.

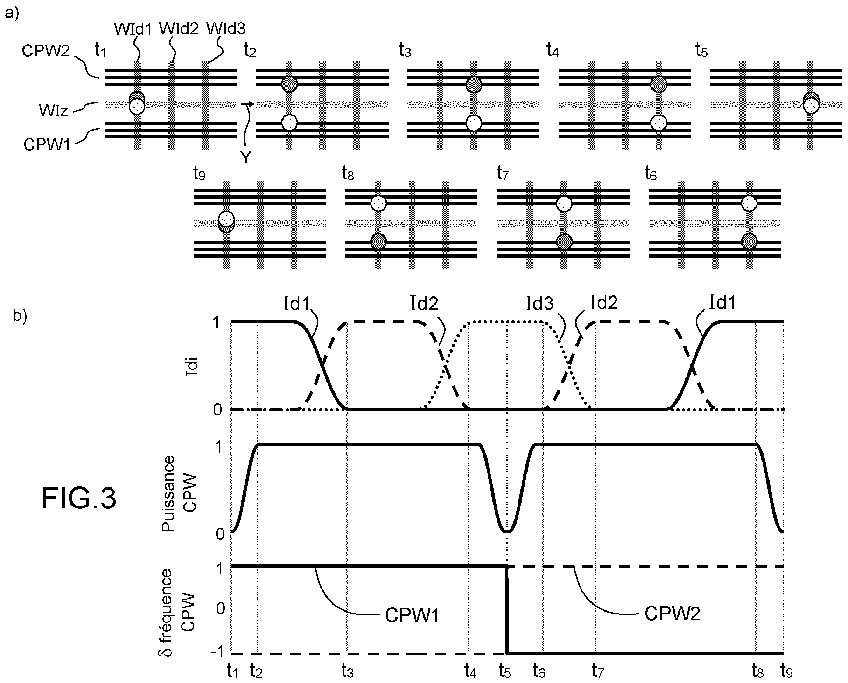

La figure 3 illustre le principe de génération de la trajectoire 16. La partie a) de la figure 3 présente schématiquement une séquence du déplacement de chacun des nuages d'atomes ultrafroids à des temps caractéristiques t₁ à t₉. La partie b) illustre de manière complémentaire une séquence des différents courants appliqués aux fils conducteurs, des puissances appliquées aux guides d'onde et des fréquences imposées aux guides d'onde, pour les temps correspondant à ceux de la partie a).

Dans la séquence présentée dans la figure 3, le courant I_{z}, non présenté, circulant dans WIz est stationnaire, à une valeur constante. Dans la partie b) les valeurs des courants, des puissances et des fréquences sont arbitraires. L'ordonnée δ fréquence correspond à une variation de fréquence exprimée en unité arbitraire, autour d'une valeur moyenne de la fréquence. Les courants parcourant les fils conducteurs peuvent être compris entre 100 µA et 10 A, et les pulsations injectées dans les guides d'onde peuvent être comprises entre 6,6 GHz et 7 GHz dans le cas de l'utilisation d'atomes de rubidium.

Dans une **étape A0,** il y a une phase de préparation des atomes. On génère un nuage d'atomes ultrafroids 12, incluant des phases d'émission desdits atomes, de refroidissement desdits atomes, d'initialisation desdits atomes dans au moins un état interne la> et de piégeage d'un nuage de dits atomes ultrafroids dans un minimum local de potentiel, à une distance h du plan de mesure (piège T, courbe « a » de la figure 2 partie a)). La hauteur h est différente de 0 car le champ magnétique homogène Bc est non nul.

Le piégeage s'effectue par passage de courants continus dans le fil WIz et dans un des fils Wldi, le point de croisement de ces deux fils définissant le point de départ (ici C1 avec WId1). On applique en même temps un champ magnétique de biais Bc parallèle au plan de la puce atomique qui se superpose au champ magnétique crée par les deux fils précédents. Le nuage d'atomes est alors piégé par le potentiel Vini à la verticale de C1, intersection des fils WIz et WId1.

Dans une **étape B0** on initialise les états internes en superposant de manière cohérente les atomes ultrafroids entre les états la> et |b> par une première impulsion π/2 . Cette impulsion peut être réalisée par un laser, une émission micro-ondes, ou plus généralement par une méthode émettant des ondes à une fréquence de transition adaptée. Les courants I_{Z} et I_{d1} sont imposés respectivement aux fils conducteurs WIz et Wld1. Les deux états internes la> et |b> sont superposés de manière cohérente et spatialement à l'aplomb du point de croisement C1.

Dans une **étape C0** on sépare spatialement un nuage d'atomes d'état interne la> dans un piège T1 d'un nuage d'atomes d'état interne |b> dans un autre piège T2 et on déplace les pièges en sens opposé suivant une trajectoire fermée 16 contenue dans un plan perpendiculaire à l'axe de mesure Z. Le nuage d'atomes d'états internes la> est symbolisé par un disque de texture claire et le nuage d'atomes d'états internes |b> est symbolisé par un disque de texture plus foncée. Cette étape est réalisée dans l'exemple de la figure 3 à partir de t₁ jusqu'à t₉.

Entre t₁ et t₂, la puissance micro-ondes injectée dans les guides d'onde CPW1 et CPW2, passe progressivement de 0 à sa valeur maximale. Une pulsation ω_{b} est envoyée dans le guide d'onde CPW1 et une pulsation ωₐ est envoyée dans le guide d'onde CPW2, ce qui permet de séparer les deux nuages d'états internes différents de part et d'autre de l'axe de symétrie Y, d'une distance d, jusqu'aux positions schématisées dans t₂. Le piège T à atomes ultrafroids décrit précédemment à l'instant t₁ est alors transformé en deux pièges T1 et T2 à atomes ultrafroids, chaque piège permettant d'immobiliser un nuage d'atomes ultrafroids d'états internes différents de l'autre piège (en l'occurrence d'états internes |a> dans l'un des pièges, par exemple T1, et d'états internes |b> dans l'autre piège T2, comme décrit dans la partie a) de la figure 2.

Un point de croisement Ci correspond au croisement du fil WIz avec le fil WIdi.

Entre t₂ et t₃, le courant I_{d1} est progressivement coupé et I_{d2} est progressivement porté à sa valeur maximale (l'intervalle de temps séparant t₂ et t₃ est typiquement de l'ordre de 10 ms et peut être compris entre 0,1 ms et 100 ms : les deux pièges T1 et T2 sont déplacés vers la droite jusqu'aux positions schématisées dans t₃.

Entre t₃ et t₄ le courant I_{d2} est progressivement coupé et I_{d3} est progressivement porté à sa valeur maximale : les deux pièges sont déplacés vers la droite jusqu'aux positions schématisées dans t₄.

Entre t₄ et t₅, la puissance micro-onde est progressivement coupée : les deux pièges sont ramenés au même endroit de la puce, schématisé dans t₅.

A t₅, les pulsations des deux guides micro-ondes sont modifiées : la pulsation ωₐ est imposée dans CPW1 et la pulsation ω_{b} est imposée dans CPW2.

Entre t₅ et t₆, la puissance dans les deux guides d'onde passe progressivement de 0 à sa valeur maximale : les pièges sont séparés dans la direction verticale comme schématisé dans la figure t₆.

Entre t₆ et t₇, le courant I_{d3} est progressivement coupé et I_{d2} est progressivement porté à sa valeur maximale : les deux pièges T1 et T2 sont déplacés vers la gauche jusqu'aux positions schématisées dans t₇.

Entre t₇ et t₈, le courant I_{d2} est progressivement coupé et I_{d1} est progressivement porté à sa valeur maximale: les deux pièges sont déplacés vers la gauche jusqu'aux positions schématisées dans t₈. Cette opération peut être répétée plusieurs fois avec d'autres premiers fils conducteurs pour augmenter l'aire incluse dans la trajectoire 16.

Entre t₈ et t₉, la puissance micro-onde dans les guides d'onde est progressivement coupée. Les deux pièges T1 et T2 se déplacent jusqu'à fusionner en un seul piège se situant au point de départ schématisé en t₁.

On applique ainsi des courants continus aux deux fils correspondant au point de croisement initial C1, et au cours du temps on applique successivement ces courants aux différents points de croisements Ci situés sur l'axe de symétrie, en appliquant simultanément une puissance microonde sur les guides d'ondes.

Pendant l'étape C0 les courants continus appliqués aux différents fils WIdi varient continûment (augmentation et diminution) entre 0 et une valeur maximale Idimax (normalisée à 1 sur la figure 3), tandis que le champ magnétique Bc et le courant I_{z} restent constants pendant la séquence. Dans toute la séquence A0, B0 et C0 les deux pièges T1 et T2 restent à l'altitude h.

Les deux pièges T1 et T2 se déplacent dans le sens « d'allumage » des points de croisement : du point de croissement C1 vers le point de croisement Cn. Le retour s'effectue en inversant les fréquences microonde et en allument les courants continus successivement dans les fils correspondants aux différents points de croissement en les parcourant de Cn vers C1. On fait ainsi parcourir aux pièges la trajectoire fermée 16.

Dans une **étape D0** on recombine les états internes la> et |b> en appliquant aux atomes ultrafroids une deuxième impulsion π / 2, ce qui transfert la différence de phase sur les populations des deux niveaux atomiques. Puis on mesure la densité d'atomes dans un état interne choisi parmi au moins |a> et |b>.

Enfin dans une **étape E0** on déterminer la phase Sagnac des atomes ultrafroids (phase de l'interféromètre) et on calcule la vitesse de rotation du capteur selon l'axe Z.

Pour mesurer une vitesse de rotation selon un axe il convient de générer une trajectoire dans un plan perpendiculaire à cet axe.

Un deuxième exemple de topologie de puce est décrit sur le document US2023/0178262 illustré figure 4.

Le puce atomique comprend une première paire de guides d'ondes (CPWX1, CPWX2) parallèles en eux et disposés symétriquement par rapport à un axe X et une deuxième paire de guides d'ondes (CPWY'1, CPWY'2) parallèles en eux et disposés symétriquement par rapport à un axe Y', qui dans cet exemple non limitatif est perpendiculaire à X et égal à l'axe Y. l'axe Y' est différent de l'axe X, les deux paires de guides sont séquentes et définissent un parallélogramme. La puce comprend également deux fils conducteurs W1 et W2 qui se croisent au point O. Lorsque le deux fils sont traversés par un courant continu ils génèrent le potentiel Vini qui présente un minimum au point O. Le nuage CL de départ est ainsi piégé au-dessus du point O. Pour des questions de symétrie préférentiellement le point O est confondu avec le centre du parallélogramme.

Dans ce document des trajectoires perpendiculaires à X (trajectoire TX) et Y (trajectoires TY) sont réalisées. Pour mesurer la vitesse de rotation Ωx selon l'axe X la trajectoire TX est générée via les guides d'onde, les fils conducteur et le champ B0. De même pour mesurer la vitesse de rotation Ωy' selon l'axe Y' une trajectoire TY' est générée via les guides d'onde, les fils conducteur et le champ B0.

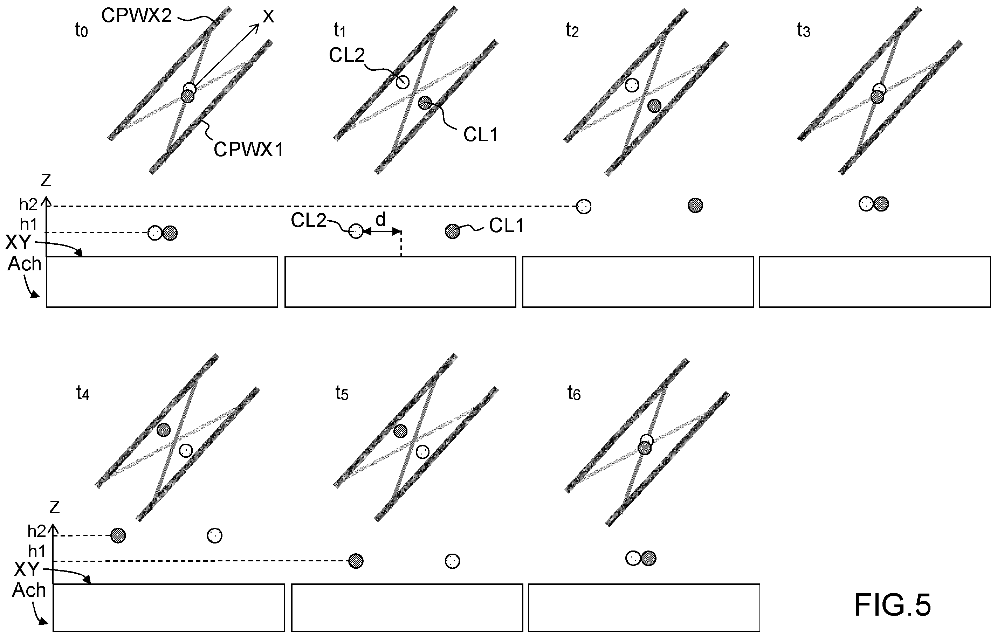

Le trajet des atomes pour la réalisation de la trajectoire TX est illustré figure 5. La séquence de Ramsey débute à t₀ (on applique des courants continus aux deux fils conducteurs W1 et W2 pour la génération de Vini). En t₁ les nuages sont séparés, la séparation des deux nuages s'effectue de manière identique au document US US2018/0352642 (application de signaux microondes aux guides). En t₂ on « fait monter » les nuages CL1 et CL2 d'une hauteur h1 vers une hauteur h2 en modification de la valeur du courant circulant dans les fils et/ou par modification de la valeur du champ B0. Une portion sensiblement verticale de la trajectoire est alors parcourue, sur une distance w = h2-h1 (voir ce document pour un exemple de chronogramme décrivant la séquence d'application des différents signaux). Puis en t₃ les deux nuages sont ramenés sur l'axe X toujours à la hauteur h2 par diminution progressive jusqu'à annulation de la puissance appliquée aux guides d'ondes. L'autre partie de la deuxième portion de trajectoire à h2 de l'autre côté de l'axe X (t₄, t₅) est obtenue par inversion des valeurs des fréquences des microondes appliquées au guides CPWX1 et CPWX2. Puis une **redescente** à la hauteur h1 en t₅ est réalisée en revenant aux valeurs initiales des courants circulant dans les fils conducteurs et/ou à la valeur initiale du champ magnétique. Les deux nuages se rejoignent enfin en t₆ par annulation de la puissance microonde appliquée aux guides.

On peut combiner la géométrie de la puce du document US2018/0352642 à celle du document US2023/0178262 en intégrant des fils additionnel définissant des points de croisements à l'intérieur du parallélogramme définit par les guides. On réalise ainsi un capteur inertiel interférométrique permettant la mesure des trois vitesses de rotation Ωx, Ωy et Ωz.

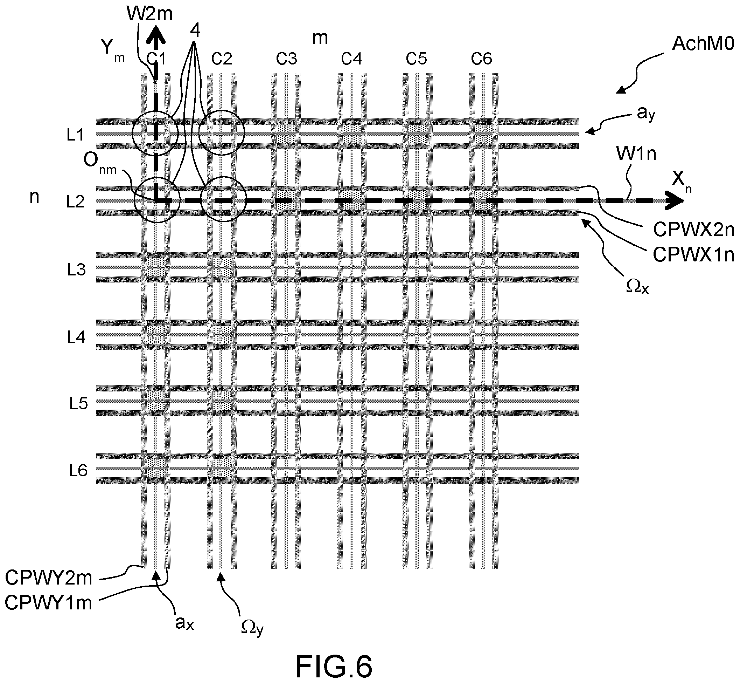

Le document US2023/0178262 décrit la réalisation une puce matricielle AchM0 permettant la réalisation de plusieurs capteurs élémentaires. La figure 6 illustre un exemple d'une matrice 6x6. Les guides d'ondes selon 6 axes Xn et selon 6 axes Ym forment les colonnes les lignes de la matrice (dans une autre géométrie décrite dans ce document les guides d'ondes forment les diagonales). Chaque pixel (n,m) de la matrice correspond à un capteur élémentaire potentiel. Par exemple les puces de la colonne C1 mesurent ax, les puces de la colonne C2 mesurent Ωy, les puces de la ligne L1 mesurent ay et les puces de la ligne L2 mesurent Ωx. Comme une mesure nécessite une séquence particulière pour les guides coplanaires, ceux-ci ne peuvent être partagés pour deux mesures simultanées de deux paramètres inertiels distincts. Ainsi les pixels 4 entourés d'un cercle ne sont pas utilisés. La puce matricielle est ainsi reconfigurée selon les besoins : le type de mesure souhaité (ax, ay, Ωx, Ωy, t), la précision souhaitée (fonction du nombre de puce réalisant simultanément la mesure), etc... On réalise ainsi sur une même puce matricielle des mesures en parallèle, redondantes et/ou complémentaires.

Selon une autre géométrie de puce atomique décrite dans le document US2022/0397396 on réalise des trajectoires selon les trois axes à l'aide de paires additionnelles de guides d'onde et d'un fil conducteur évasé définissant un plan DC. Des séquences particulières de signaux microonde sont appliquées aux différentes paires, incluant des signaux à une fréquence ωₐ, une fréquence ω_{b} et des signaux incluant les deux fréquences, signal noté ωₐ+ω_{b} et appelé signal « somme ». Un effet de l'application d'un signal « somme » (signal issu de la somme d'un signal à la fréquence ωₐ et d'un signal à la fréquence ω_{b}) est de repousser les deux nuages du côté opposé à celui où se trouve le guide dans lequel circule ce signal, pour la réalisation d'une trajectoire pour la mesure d'une vitesse de rotation selon l'axe Z (voir par exemple les figures 16 à 18 de ce document). Dans ce document est également décrit un passage d'une hauteur h1 à une hauteur h2 lorsque deux guides disposés de part et d'autres des nuages sont simultanément parcourus par le signal « somme », pour la réalisation de trajectoires pour la mesure d'une vitesse de rotation selon les axes X et Y (voir par exemple figures 20 et 22 de ce document).

Une autre géométrie de puce est décrite dans le document US2022/0397397, comprenant deux rubans conducteurs sécants dont l'intersection est comprise au moins en partie dans le parallélogramme défini par les deux paires de guides d'onde. Les trajectoires sont réalisées par application d'une séquence spécifique de signaux microonde dans les guides, en utilisant également l'effet « repoussoir » de signaux « somme ».

Les deux géométries de puces précédentes sont également compatibles d'une architecture matricielle.

Pour obtenir une mesure plus précise d'une rotation autour d'un certain axe on peut utiliser la redondance de la mesure (utilisation de plusieurs capteurs, par exemple avec une architecture matricielle de capteurs telles que décrite précédemment).

Ainsi un capteur basé sur une puce matricielle comprenant une pluralité de capteurs élémentaires selon les diverses géométries décrites ci-dessus permet de:

Réaliser sur une seule et même puce la fonction horloge, la mesure de l'accélération suivant deux axes orthogonaux et la mesure des rotations suivant trois axes orthogonaux deux à deux,

Dupliquer la géométrie élémentaire sur une même puce atomique pour réaliser toutes les mesures précédemment citées en parallèle et implémenter une redondance entre les différentes mesures.

Cependant cette solution ne permet pas l'élimination des biais de mesures ni la correction d'erreur.

À toute mesure est associée une incertitude qui se traduit par une erreur sur la mesure. Cette erreur peut être due à des facteurs aléatoires qui sont inévitables et qu'on ne peut corriger (on peut cependant en estimer l'amplitude), mais aussi à des facteurs systématiques dus à des imperfections du capteur ou des conditions de mesures imparfaites. C'est ce dernier type d'erreur qu'on appelle aussi biais.

Un but de la présente invention est de remédier aux inconvénients précités en proposant un capteur inertiel et un procédé de mesure permettant la correction de certains biais, afin d'obtenir de meilleurs performances du capteur.

### DESCRIPTION DE L'INVENTION

La présente invention a pour objet un capteur inertiel à atomes ultrafroids interférométrique de type gyromètre comprenant :
- une puce atomique placée dans une enceinte à vide, comportant un plan XY dit plan de mesure normal à un axe Z, et comprenant au moins un ensemble d'un premier et un deuxième capteur élémentaire, chaque capteur élémentaire comprenant :
   ∘ au moins une première paire de guides d'ondes parallèles en eux et au moins une deuxième paire de guides d'ondes parallèles en eux et sécante avec la première paires,
   ∘ un groupe d'un ou plusieurs éléments conducteurs,
- un dispositif de génération d'atomes configuré pour générer un nuage initial d'atomes ultrafroids associé au premier capteur élémentaire et un nuage initial d'atomes ultrafroids associé au deuxième capteur élémentaire, lesdits nuages initiaux étant localisés près dudit plan XY de ladite puce,
- un générateur d'un champ magnétique homogène,
- un dispositif d'alimentation comprenant au moins un générateur microonde et au moins un générateur de courant continu, le dispositif d'alimentation étant configuré pour appliquer des signaux microonde auxdits guides d'ondes et des courants continus auxdits éléments conducteurs,
- le générateur de champ magnétique et le dispositif d'alimentation étant configurés par appliquer le champ magnétique, les courants continus et les signaux microondes selon une séquence prédéterminée,
- un agencement dudit groupe d'un ou plusieurs éléments conducteurs et ladite séquence étant configurés, lors de la mise en œuvre de chaque capteur, pour:
   ∘ générer un potentiel initial de piégeage dudit nuage initial d'atomes ultrafroids,
   ∘ séparer spatialement le nuage initial en un premier nuage d'atomes ultrafroids dans un premier état interne d'un deuxième nuage d'atomes ultrafroids dans un deuxième état interne, en formant respectivement un premier et deuxième pièges à atomes ultrafroids,
   ∘ et déplacer lesdits pièges suivant une trajectoire fermée parallèle ou perpendiculaire à XY parcourue dans un sens par le premier nuage d'atomes ultrafroids et dans le sens opposé par le deuxième nuage d'atomes ultrafroids,
- l'agencement dudit groupe d'un ou de plusieurs éléments conducteurs de chaque capteur et ladite séquence étant en outre configurés pour que la trajectoire associée au premier capteur élémentaire et la trajectoire associée au deuxième capteur élémentaire soient identiques et parcourues simultanément et en sens inverse par les nuages d'atomes ultrafroids associés à un même état interne,
- le capteur comprenant en outre un système de détection adapté à mesurer au moins une première phase du premier capteur élémentaire et une deuxième phase du deuxième capteur élémentaire, une vitesse de rotation étant déterminée à partir d'une différence entre la première et la deuxième phase.

Selon un mode de réalisation le dispositif d'alimentation est en outre configuré pour appliquer des courants continus auxdits guides d'onde.

Selon un mode de réalisation le capteur selon l'invention comprend au moins trois ensembles configurés respectivement pour réaliser une mesure de rotation selon trois axes orthogonaux.

Selon un mode de réalisation la puce atomique présente une structure matricielle dont les pixels définissent des capteurs élémentaires potentiels, un ensemble comprenant deux pixels de la matrice.

Selon un mode de réalisation des ensembles d'un premier et d'un deuxième capteur élémentaires présentent une paire de guides d'onde en commun ou au moins un élément conducteur en commun.

Selon un autre aspect l'invention concerne une centrale inertielle comprenant au moins trois capteurs de type gyromètre selon l'invention configurés pour réaliser respectivement une mesure de vitesse de rotation selon trois axes orthogonaux, la puce atomique matricielle comprenant en outre des pixels configurés pour réaliser au moins une mesure d'horloge et des pixels configurés pour réaliser une mesure d'accélération selon au moins deux axes orthogonaux.

Selon un autre aspect l'invention concerne un procédé de mesure d'une vitesse de rotation par un capteur inertiel à atomes ultrafroids interférométrique comprenant une puce atomique placée dans une enceinte à vide, comportant un plan XY dit plan de mesure normal à un axe Z, et comprenant au moins un ensemble d'un premier et un deuxième capteur élémentaire, chaque capteur élémentaire comprenant :
- au moins une première paire de guides d'ondes parallèles en eux et au moins une deuxième paire de guides d'ondes
- un groupe d'un ou plusieurs éléments conducteurs,
le procédé comprenant les étapes consistant à :
A. Générer un nuage initial d'atomes ultrafroids associé au premier capteur élémentaire et un nuage initial d'atomes ultrafroids associé au deuxième capteur élémentaire, lesdits nuages initiaux étant localisés près dudit plan XY de ladite puce,
B. Générer un champ magnétique homogène,
C. Générer un potentiel initial de piégeage dudit nuage initial d'atomes ultrafroids,
D. Pour chaque capteur initialiser un premier état interne et un deuxième état interne par une première impulsion π / 2
E. Pour chaque capteur séparer spatialement le nuage initial en un premier nuage d'atomes ultrafroids dans le premier état interne d'un deuxième nuage d'atomes ultrafroids dans le deuxième état interne, en formant respectivement un premier et deuxième pièges à atomes ultrafroids,
F. Pour chaque capteur déplacer lesdits pièges suivant une trajectoire fermée parallèle ou perpendiculaire à XY parcourue dans un sens par le premier nuage d'atomes ultrafroids et dans le sens opposé par le deuxième nuage d'atomes ultrafroids,
   - les étapes B à F s'effectuant en appliquant, selon une séquence prédéterminée, un champs magnétique homogène, des courants continus auxdits éléments conducteurs et des signaux microonde auxdits guides d'onde,
   - l'agencement dudit groupe d'éléments d'un ou plusieurs éléments conducteurs et ladite séquence prédéterminée étant en outre configurés pour que la trajectoire associée au premier capteur élémentaire et la trajectoire associée au deuxième capteur élémentaires soient identiques et parcourues simultanément et en sens inverse par les nuages d'atomes ultrafroids associés à un même état interne,
G. Recombiner lesdits premier et deuxième états internes en appliquant auxdits atomes ultrafroids une deuxième impulsion π/2,
H. Mesurer au moins une première phase du premier capteur élémentaire et une deuxième phase du deuxième capteur élémentaire, une vitesse de rotation étant déterminée à partir d'une différence entre la première et la deuxième phase.

Selon un mode de réalisation l'étape C comprend l'application de courants continus dans au moins un élément conducteur.

Selon un mode de réalisation l'étape E comprend l'application de signaux micro-onde dans la première paire de guides d'onde.

Selon un mode de réalisation l'étape F comprend l'application de signaux microonde dans au moins un guide d'onde de la deuxième paire.

Selon un mode de réalisation l'étape F comprend l'application de courants continus à certains éléments conducteurs.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :
La figure 1 déjà citée illustre un premier exemple de topologie de puce atomique selon l'état de la technique.
La figure 2 déjà citée illustre la géométrie des guides et fils de la puce atomique ainsi que les pièges à atomes ultrafroids et les potentiels associés selon l'état de la technique.
La figure 3 déjà citée illustre le principe de génération de la trajectoire. La partie a) présente schématiquement une séquence du déplacement de chacun des nuages d'atomes ultrafroids à des temps caractéristiques t₁ à t₉. La partie b) illustre de manière complémentaire une séquence des différents courants appliqués aux fils conducteurs, des puissances appliquées aux guides d'onde et des fréquences imposées aux guides d'onde, pour les temps correspondant à ceux de la partie a).
La figure 4 déjà citée illustre un deuxième exemple de topologie de puce atomique selon l'état de la technique.
La figure 5 déjà citée illustre le trajet des atomes pour la réalisation de la trajectoire illustrée figure 4.
La figure 6 déjà citée illustre un exemple d'une puce atomique matricielle selon l'état de la technique.
La figure 7 illustre le parcours des deux trajectoires en sens inverse selon l'invention par les nuages d'atomes.
La figure 8 illustre le capteur inertiel interférométrique à atomes ultrafroids selon l'invention.
La figure 9 illustre une première manière de réaliser deux trajectoires TZ1 et TZ2 contenues dans le plan XY (mesure de Ωz) parcourues en sens inverse par chaque nuage dans un état interne la> ou |b>, dans laquelle le déplacement des nuages s'opère avec des fils conducteurs.
La figure 10 illustre une deuxième manière de réaliser deux trajectoires TZ1 et TZ2 contenues dans le plan XY (mesure de Wz) parcourues en sens inverse par chaque nuage dans un état interne la> ou |b>, dans laquelle le déplacement des nuages s'opère par application de courants continus à des fils conducteurs.
La figure 11 illustre une troisième manière de réaliser deux trajectoires TZ1 et TZ2 contenues dans le plan XY (mesure de Wz) parcourues en sens inverse par chaque nuage dans un état interne la> ou |b>, dans laquelle le déplacement des nuages s'opère par application de courants continus à des fils conducteurs.
La figure 12 illustre une quatrième manière de réaliser deux trajectoires TZ1 et TZ2 contenues dans le plan XY (mesure de Wz) parcourues en sens inverse par chaque nuage dans un état interne la> ou |b>, dans laquelle le déplacement des nuages s'opère par application de signaux microonde à des guides d'onde.
La figure 13 illustre une cinquième manière de réaliser deux trajectoires TZ1 et TZ2 contenues dans le plan XY (mesure de Wz) parcourues en sens inverse par chaque nuage dans un état interne la> ou |b>, dans laquelle le déplacement des nuages s'opère par application de signaux microonde à des guides d'onde.
La figure 14 illustre une sixième manière de réaliser deux trajectoires TZ1 et TZ2 contenues dans le plan XY (mesure de Wz) parcourues en sens inverse par chaque nuage dans un état interne la> ou |b>, dans laquelle le déplacement des nuages s'opère par application de signaux microonde à des guides d'onde.

### DESCRIPTION DETAILLEE DE L'INVENTION

L'idée de l'invention est d'utiliser deux capteurs élémentaires configurés d'une manière particulière pour éliminer des biais de mesure.

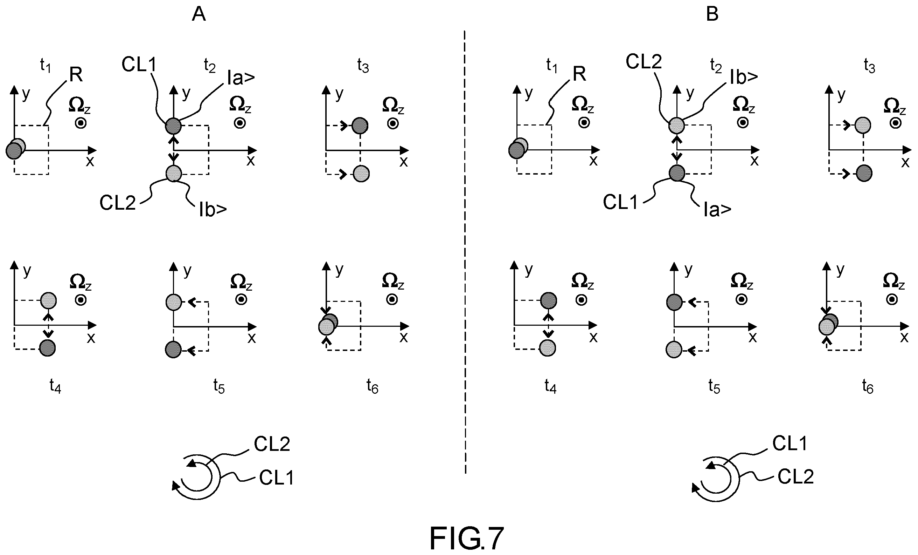

La formule (1) énoncée ci-dessus correspond à un sens de parcours du nuage d'atomes CL1 (et CL2 de sens opposé) sur une trajectoire telle que décrite précédemment. On considère à titre illustratif que la trajectoire est un rectangle R parcouru dans un sens horaire par CL1 (état |a>) et en sens antihoraire par CL2 (état |b>) tel qu'illustré figure 7 partie A.

Pour un gyromètre, le signe du déphasage induit par la présence d'une rotation pendant la phase d'interférométrie dépend de la façon dont les deux nuages d'atomes parcourent une même trajectoire géométrique. Le signe du déphasage dépend du sens de parcours de chacun des états par rapport au sens de rotation.

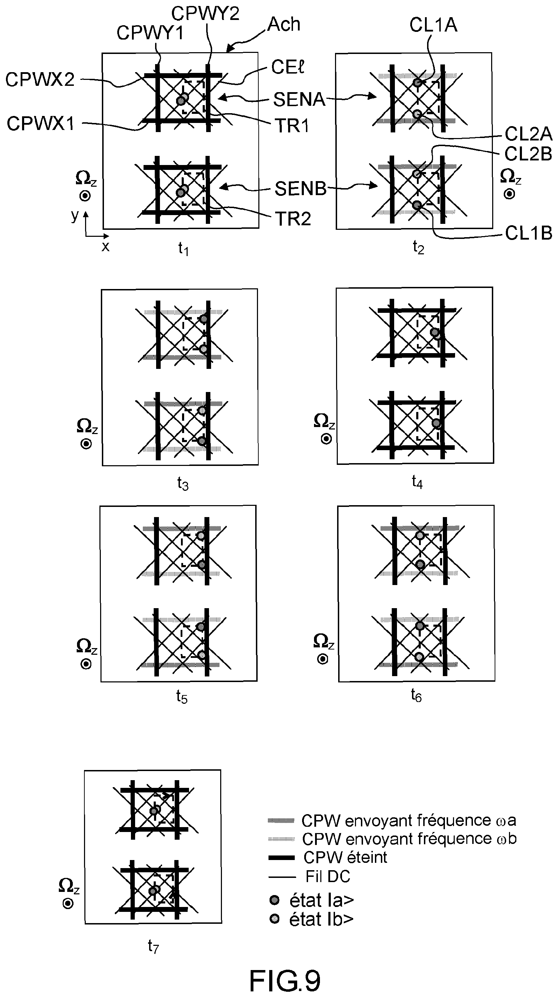

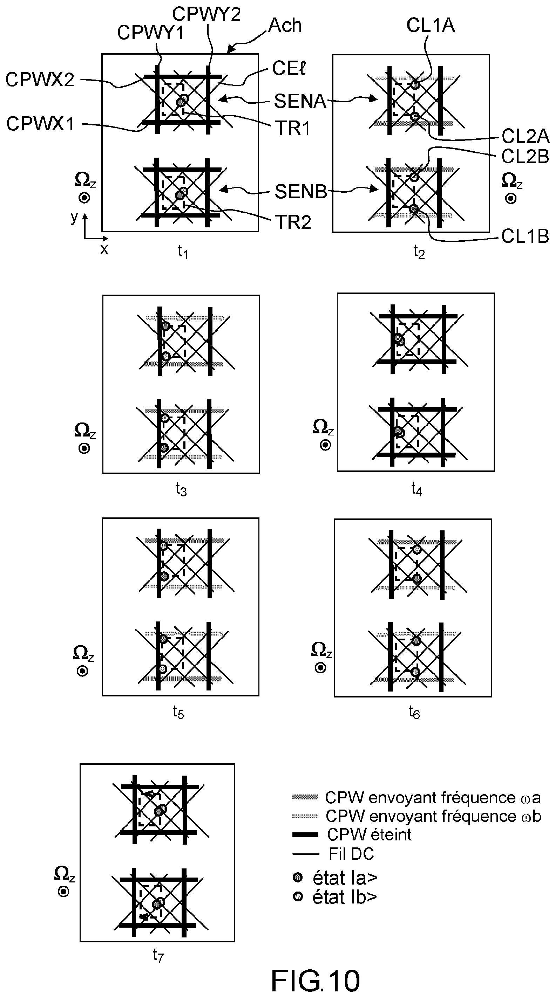

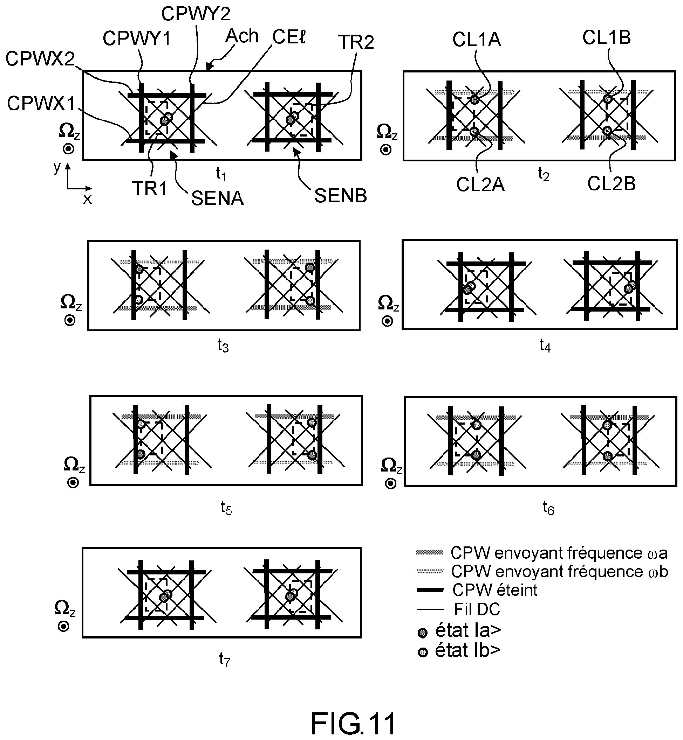

Soit tout le monde part dans le même sens (vers la droite figure 9, vers la gauche figure 10), et alors le sens de séparation doit être inversé. Soit l'un part vers la droite, l'autre vers la gauche, et le sens est le même (figure 11).

Considérons deux gyromètres à atomes froids disposés sur la même puce avec séparation/déplacement des pièges à l'aide d'un potentiel de piégeage déplaçable, chacun étant orienté de sorte qu'il soit sensible aux rotations autour d'un même axe (e.g. l'axe des *z*). Cela signifie que les deux trajectoires suivies par les nuages sont disposées dans le même plan. *Si le sens de parcours* des états atomiques utilisé sur ces capteurs est opposé, chaque gyromètre va accumuler le même déphasage à une différence de signe près. En réalisant simultanément ces deux mesures, il est possible d'éliminer la présence de biais de mesure comme expliqué ci-dessous.

Ainsi partant de la figure 7 partie A, si on inverse les sens de propagation des atomes de chaque état (i.e. la trajectoire de l'état |a> décrit le rectangle dans le sens antihoraire, et l'état |b> décrit la même trajectoire mais dans le sens horaire) tel qu'illustré figure 7 partie B, alors ce déphasage change de signe.

Soit *φ*_{*tot-S*1} la phase accumulée lors de la séquence interférométrique correspondant à la figure 7 partie A et *φ*_{*tot-S*2} la phase accumulée lors de la séquence interférométrique correspondant à la figure 7 partie B. On a en reprenant la formule (1) :
${φ}_{tot _ S 1} = {φ}_{clock} + {φ}_{rot} = \left(ω-{ω}_{ab}+\frac{4 m N {Ω}_{z} ⋅ A}{ℏ}\right) {T}_{R}$ (2A)
${φ}_{tot _ S 2} = {φ}_{clock} - {φ}_{rot} = \left(ω-{ω}_{ab}-\frac{4 m N {Ω}_{z} ⋅ A}{ℏ}\right) {T}_{R}$ (2B)

En considérant que la mesure est entachée d'un biais, on a:
${φ}_{tot _ S 1} = {φ}_{clock} - {φ}_{rot} + {φ}_{biais}$
${φ}_{tot _ S 2} = {φ}_{clock} - {φ}_{rot} + {φ}_{biais}$

Avec *φ_{biais}* phase additionnelle due au biais présente dans toute mesure (biais dit « additif »).

Si un biais (non négligeable) est présent, la détermination de *φ*_{*tot-S*1} *- φ*_{*tot_S*2} permet de l'éliminer:
${φ}_{rot} = \frac{1}{2} \left({φ}_{tot _ S 1}-{φ}_{tot _ S 2}\right)$ (3)

Pour effectuer une mesure permettant de supprimer le biais, il faut réaliser deux séquences interférométriques en parallèle avec deux capteurs de la même puce.

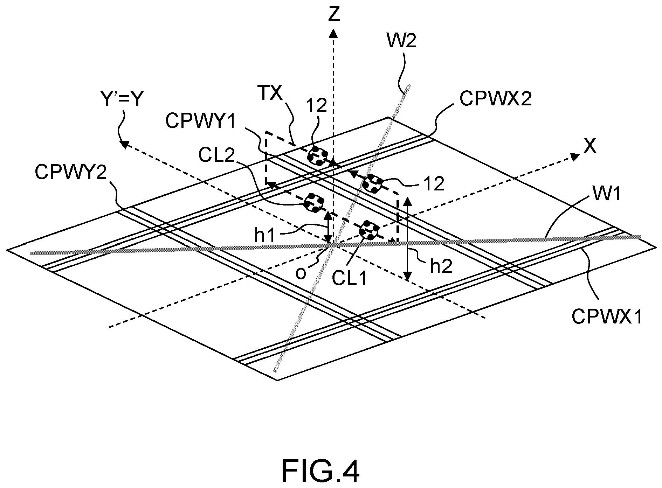

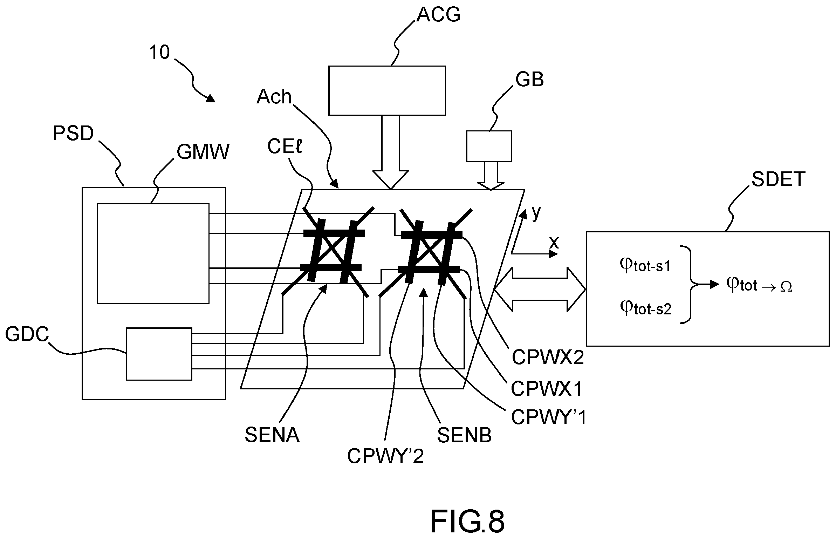

Le capteur inertiel interférométrique à atomes ultrafroids 10 selon l'invention utilise cette propriété et est illustré figure 8. Il comprend une puce atomique ACh placée dans une enceinte à vide, comportant un plan XY dit plan de mesure normal à l'axe Z. La puce comprend au moins un ensemble d'un premier capteur élémentaire SENA et un deuxième capteur élémentaire SENB. Chaque capteur élémentaire comprend au moins une première paire de guides d'ondes (CPWX1, CPWX2) parallèles en eux et au moins une deuxième paire de guides d'ondes (CPWY'1, CPWY'2) parallèles en eux et sécante avec la première paire. L'intersection des deux paires définissent un parallélogramme tel qu'illustré figure 4. La puce atomique comprend également un groupe d'un ou plusieurs éléments conducteurs CEI.

Le capteur comprend en outre un dispositif de génération d'atomes ACG configuré pour générer un nuage initial d'atomes ultrafroids associé au premier capteur élémentaire SENA et un nuage initial d'atomes ultrafroids associé au deuxième capteur élémentaire SENB. Les nuages initiaux sont localisés près dudit plan XY de la puce. Le capteur comprend également un générateur GB d'un champ magnétique homogène Bc et un dispositif d'alimentation PSD. Le dispositif d'alimentation comprend au moins un générateur microonde GMW configuré pour appliquer des signaux microonde aux guides d'ondes et au moins un générateur de courant continu configuré pour appliquer des courants continus aux éléments conducteurs. Le générateur de champ magnétique GB et le dispositif d'alimentation PSD étant configurés pour appliquer le champ magnétique Bc, les courants continus et les signaux microondes selon une séquence prédéterminée.

L'agencement du groupe d'un ou plusieurs éléments conducteurs et la séquence prédéterminée sont configurés, lors de la mise en œuvre de chaque capteur, pour effectuer sur les nuages les différentes étapes décrites précédemment.

Il s'agit tout d'abord de générer un potentiel initial de piégeage Vini dudit nuage initial d'atomes ultrafroids, puis de séparer spatialement le nuage initial en un premier nuage d'atomes ultrafroids (CL1A pour SENA et CL1B pour SNEB) dans un premier état interne d'un deuxième nuage d'atomes ultrafroids (CL2A pour SENA et CL2B pour SENB) dans un deuxième état interne, en formant respectivement un premier piège à atomes ultrafroids (T1A pour SENA et T1B pour SENB) et un deuxième piège à atomes ultrafroids (T2A pour SENA et T2B pour SENB).

Puis on déplace les pièges suivant une trajectoire fermée parallèle ou perpendiculaire à XY parcourue dans un sens par le premier nuage d'atomes ultrafroids et dans le sens opposé par le deuxième nuage d'atomes ultrafroids.

L'agencement du groupe d'un ou de plusieurs éléments conducteurs et la séquence prédéterminée sont en outre configurés pour que la trajectoire TR1A associée au premier capteur élémentaire et la trajectoire TR2A associée au deuxième capteur élémentaire soient identiques et parcourues simultanément et en sens inverse par les nuages d'atomes ultrafroids associés à un même état interne. Il s'agit d'appliquer le principe des deux trajectoires parcourues en sens inverse illustré figure 7.

Le capteur comprend en outre un système de détection SDET adapté à mesurer au moins une première phase *φ*_{*tot*_*S*1} du premier capteur élémentaire et une deuxième phase *φ*_{*tot_S*2} du deuxième capteur élémentaire. La vitesse de rotation est déterminée à partir d'une différence entre la première et la deuxième phase (propriété exprimée avec la formule (2)). Lors de la mise en œuvre du capteur selon l'invention on effectue donc une double mesure simultanée d'un même paramètre, la phase accumulée pendant la séquence interférométrique.

En utilisant la propriété de l'interféromètre explicitée par les formules (2A) (2B) et (3) la vitesse de rotation ainsi déterminée est corrigée du biais dit « additif » qui entache chaque mesure de manière identique. Cette réduction des biais de mesure conduit à une incertitude de mesure du gyromètre selon l'invention réduite, soit une meilleure sensibilité, ce qui permet d'obtenir des temps de navigation inertielle plus longs.

Le capteur selon l'invention est compatible de toute géométrie de puce atomique comprenant les deux paires de guides microondes permettant la génération de pièges dit habillés (voir état de la technique), c'est-à-dire la génération d'un potentiel de piégeage, et le déplacement sélectif de ces pièges en fonction des états internes selon une trajectoire fermée.

Ainsi les éléments conducteurs CEl de la puce peuvent être agencés de différentes manières. Ce qui compte c'est la génération d'un potentiel de piégeage issu de la combinaison des champs DC générés par les éléments conducteurs parcourus de courants continus et des champs microonde générés par les guides d'ondes parcourus de signaux microonde, ce potentiel de piégeage pouvant être déplacé pour la réalisation de la trajectoire fermée.

Par exemple le capteur selon l'invention est compatible avec toutes les géométries de puces décrites dans l'état de la technique, associées aux différents modes d'adressage, c'est-à-dire à des séquences particulières d'application du champ magnétique, des courants continus et des champs microonde.

### Typiquement selon l'état de la technique:

Le potentiel de piégeage initial est généré par application de courants continus dans les éléments conducteurs, typiquement deux fils qui se croisent au point O, ou deux rubans qui se croisent, ou un fil évasé ...

La séparation des deux pièges T1 et T2 s'effectue par applications de signaux microondes aux différents guides d'ondes,

Le déplacement des pièges, réalisé en déplaçant le minimum du potentiel de piégeage, s'effectue :
soit par application de courants continus à d'autres fils conducteurs (US2018/0352642), aux mêmes fils et/ou par application d'un champ magnétique différent (US2023/0178262),
soit par application de signaux microondes aux guides selon une séquence particulière d'allumage et d'extinction des guides avec des signaux de différentes fréquences, en association avec une géométrie particulière d'éléments conducteurs : fil évasé (US2022/0397396); deux rubans sécants (US2022/0397397).

En effet soit on déplace le minimum du champ magnétique DC (issu du courant continu dans les fils et du champ magnétique homogène) ce qui déplace le minimum du piège résultant de la combinaison du champ magnétique DC et du champ MW (issu du passage des signaux micro-onde dans les guides d'onde), soit le champ magnétique DC est fixe et on change le champ magnétique MW ce qui déplace le piège résultant de la combinaison du champ magnétique DC et du champ MW.

Selon autre un mode de réalisation, une fois les nuages séparés, on remplace les signaux microondes appliqués aux guides d'onde par des courants continus. Ce mode de réalisation est décrit pour l'application gyromètre dans le document FR2306475 (non encore publié à la date de dépôt). Le dispositif d'alimentation PSD est dans ce cas en outre configuré pour appliquer des courants continus aux guides d'onde. Ce remplacement permet de diminuer le bruit de mesure.

Le capteur selon l'invention est ainsi indépendant de la géométrie de la puce atomique et de la méthode séparation/déplacement sélective des pièges utilisée. La puce peut présenter une autre géométrie d'éléments conducteurs associés aux guides d'ondes non décrites dans les documents précités, ainsi que des guides d'ondes additionnels. La mise en œuvre du capteur peut utiliser d'autres méthodes (séquences) de séparation/déplacement permettant la réalisation d'un potentiel de piégeage déplaçable (c'est-à-dire dont le minimum peut être déplacé) que celles décrites dans les documents précités.

Nous allons à présent décrire des exemples non limitatifs de réalisation du capteur selon l'invention.

Les figures 9 à 16 illustre différentes manières de réaliser deux trajectoires TR1 et TR2 contenues dans le plan XY (mesure de Ω_{z}) parcourues en sens inverse par chaque nuage dans un état interne la> ou |b>. La position des différents nuages est représentée pour une série de temps caractéristiques t₁ à t₇ : t₁ situation de départ ; t₂ séparation ; t₃ déplacement ; t₄ recombinaison; t₅ séparation (dans le sens opposé) ; t₆ déplacement ; t₇ recombinaison. La teinte ou la texture d'un guide illustre son état « éteint » (pas de signal appliqué ; noir) ou « allumé » (signal appliqué ; différents gris). Le sens de la flèche sur les trajectoires pour le dernier temps t₇ illustre le sens de parcours des trajectoires pour le nuage dans l'état interne la> (gris foncé). D'autres trajectoires dans le plan XY et dans les autres plans (XZ et YZ) peuvent être obtenues de manière non limitative avec les géométries et séquences décrites dans l'état de l'art.

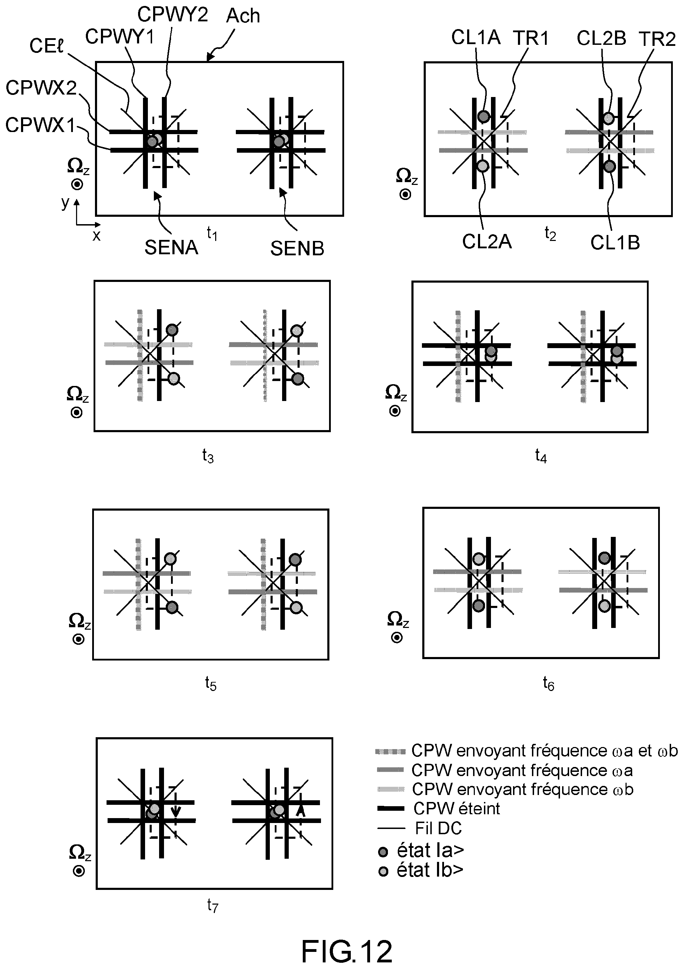

Les figures 9 à 11 illustrent le cas pour lequel le déplacement des pièges s'opère par application de courants continus dans deux points de croisement. Les figures 12 à 14 illustrent le cas pour lequel le déplacement des pièges s'opère par effet « repoussoir » en appliquant un signal « somme » à un des guides de la paire qui n'est pas utilisée pour la séparation. Pour toutes les figures le déplacement des pièges s'opère horizontalement selon l'axe X et la séparation s'opère verticalement selon Y par application d'un champ microonde dans les guides selon X CPWX1 et CPWX2. Dans ces exemples on a Y'=Y, la première paire et la deuxième paire de guides d'onde sont perpendiculaires entre elles pour chaque capteur de l'ensemble.

Dans la figure 9 le sens de séparation des deux états est opposé pour les deux trajectoires (nuage CL1A dans l'état la> de SENA vers le haut, nuage CL1B dans l'état la> de SENB vers le bas) et chaque couple de nuage associé à un capteur élémentaire se déplace dans la même direction, ici la droite.

Dans la figure 10 le sens de séparation des deux états est opposé pour les deux trajectoires (nuage CL1A dans l'état la> de SENA vers le haut, nuage CL1B dans l'état la> de SENB vers le bas) et chaque couple de nuage associé à un capteur élémentaire se déplace dans la même direction, ici la gauche.

Dans la figure 11 le sens de séparation des deux états est identique pour les deux trajectoires (nuage CL1A dans l'état la> de SENA et nuage CL1B dans l'état la> de SENB vers le haut) et les deux couples de nuages associés aux deux capteurs élémentaires se déplace dans une direction opposée, la gauche pour SENA (nuages CL1A et CL2A) et la droite pour SENB (nuages CL1B et CL2B).

Dans la figure 12 le sens de séparation des deux états est opposé pour les deux trajectoires (nuage CL1A dans l'état la> de SENA vers le haut, nuage CL1B dans l'état la> de SENB vers le bas) et chaque couple de nuage associé à un capteur élémentaire se déplace dans la même direction, ici la droite. Pour cela un signal « somme » est appliqué au guide selon Y du côté opposé au déplacement, soit du côté gauche.

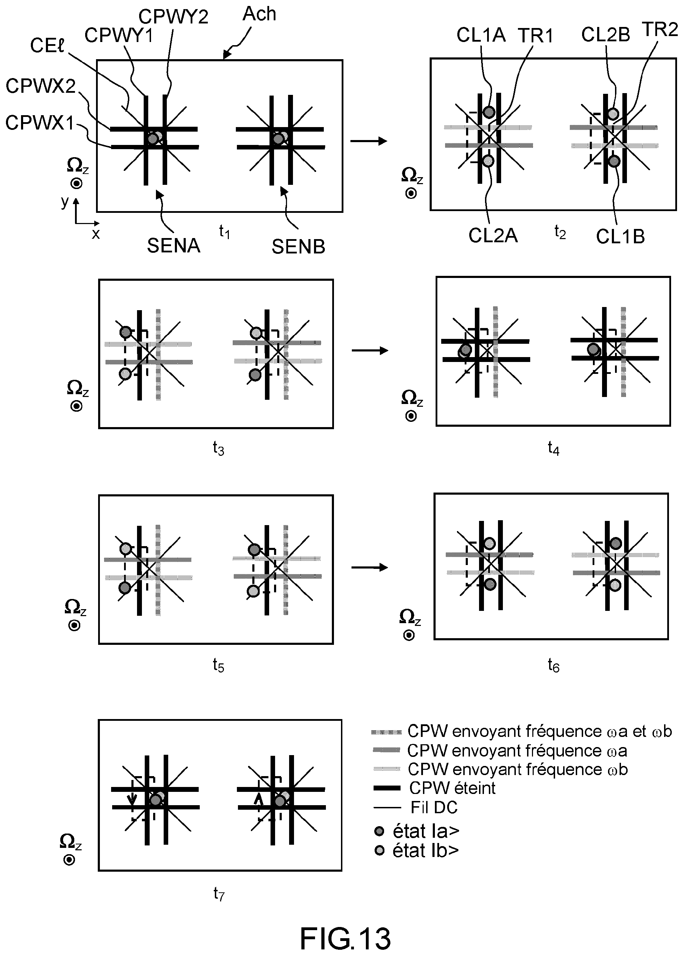

Dans la figure 13 le sens de séparation des deux états est opposé pour les deux trajectoires (nuage CL1A dans l'état la> de SENA vers le haut, nuage CL1B dans l'état la> de SENB vers le bas) et chaque couple de nuage associé à un capteur élémentaire se déplace dans la même direction, ici la gauche. Pour cela un signal « somme » est appliqué au guide selon Y du côté opposé au déplacement, soit du côté droit.

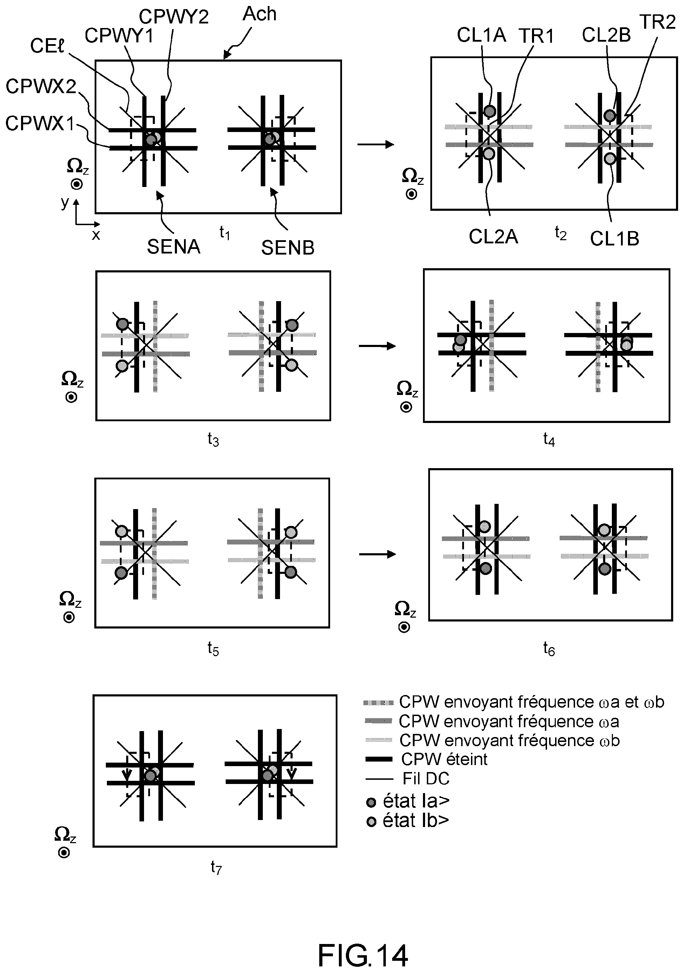

Dans la figure 14 le sens de séparation des deux états est identiques pour les deux trajectoires (nuage CL1A dans l'état la> de SENA et nuage CL1B dans l'état la> de SENB vers le haut) et les couples de nuage associé à aux deux capteurs élémentaires se déplacent dans une direction opposée, gauche pour SENA et droite pour SEN B. Pour cela un signal « somme » est appliqué au guide selon Y du côté droit pour SENA et au guide selon Y du côté gauche pour SENB.

Selon un mode de réalisation le capteur selon l'invention comprend au moins trois ensembles configurés respectivement pour réaliser une mesure de rotation selon trois axes orthogonaux. Pour cela pour chaque ensemble, la première paire et la deuxième paire de guide d'onde sont perpendiculaires entre elles. Par exemple le premier ensemble est configuré pour mesurer Ωz avec la génération d'une trajectoire perpendiculaire à Z, le deuxième ensemble est configuré pour mesurer Ωx avec la génération d'une trajectoire perpendiculaire à X, et le troisième ensemble est configuré pour mesurer Ωy avec la génération d'une trajectoire perpendiculaire à Y (on a en effet Y'=Y).

Selon un mode de réalisation les différents ensembles sont organisés en matrice. Selon un mode de réalisation la puce atomique du capteur selon l'invention présente une structure matricielle dont les pixels définissent des capteurs élémentaires potentiels. Un ensemble selon l'invention comprenant deux capteurs SENA et SENB correspond à deux pixels de la matrice.

La structure de la matrice est par exemple telle que décrite dans l'état de la technique. Selon un mode de réalisation c'est l'agencement des paires de guides d'ondes qui définit colonnes et les lignes de la matrice, tel qu'illustré figure 6. Selon un autre mode de réalisation c'est l'agencement des éléments conducteurs (fils / rubans / fils évasés) qui définit les lignes et les colonnes, les paires de guides étant typiquement selon les diagonales de la matrices (voir des exemples dans le document US2023/0178262).

Afin d'optimiser les mesures, selon un mode de réalisation des ensembles d'un premier et d'un deuxième capteur élémentaires présentent une paire de guides d'onde en commun ou au moins un élément conducteur en commun. On peut ainsi utiliser une même séquence appliquée aux guides ou aux éléments en commun pour faire la mesure des deux phases selon l'invention.

Typiquement dans les figures illustrant différents exemples, on voit que pour certaines configurations le guides d'ondes selon X peuvent être communs aux deux capteurs (figure 11 et 14), ou les guides selon Y peuvent être communs (figure 9, 10, 11, 12 et 13), ce qui optimise l'agencement matriciel.

L'invention concerne également une centrale inertielle sur puce atomique matricielle comprenant au moins trois capteurs de type gyromètre selon l'invention configurés pour réaliser respectivement une mesure de vitesse de rotation selon trois axes orthogonaux, la puce atomique matricielle comprenant en outre des pixels configurés pour réaliser au moins une mesure d'horloge et des pixels configurés pour réaliser une mesure d'accélération selon au moins deux axes orthogonaux.

Selon un autre aspect l'invention concerne un procédé de mesure d'une vitesse de rotation par un capteur inertiel à atomes ultrafroids 10 interférométrique comprenant une puce atomique ACh placée dans une enceinte à vide, comportant un plan XY dit plan de mesure normal à un axe Z, et comprenant au moins un ensemble d'un premier et un deuxième capteur élémentaire (SENA, SENB), chaque capteur élémentaire comprenant :
- au moins une première paire de guides d'ondes (CPWX1, CPWX2) parallèles en eux et au moins une deuxième paire de guides d'ondes (CPWY'1, CPWY'2) parallèles en eux et sécante avec la première paires,
- un groupe d'un ou plusieurs éléments conducteurs,

Le procédé comprend une première étape A consistant à générer un nuage initial d'atomes ultrafroids associé au premier capteur élémentaire SENA et un nuage initial d'atomes ultrafroids associé au deuxième capteur élémentaire SENB, les nuages initiaux étant localisés près dudit plan XY de ladite puce. Dans une étape B on génère un champ magnétique homogène et dans une étape C on génère un potentiel initial de piégeage Vini du nuage initial d'atomes ultrafroids.

Puis pour chaque capteur dans une étape D on initialise le premier état interne la> et le deuxième état interne |b> par une première impulsion / 2.

Puis pour chaque capteur dans une étape E on sépare spatialement le nuage initial en un premier nuage (CL1A, CL1B) d'atomes dans le premier état interne d'un deuxième nuage (CL2A, CL2B) d'atomes ultrafroids dans le deuxième état interne, en formant respectivement un premier pièges à atomes ultrafroids (T1A, T1B) et un deuxième piège à atomes ultrafroids (T2A, T2B).

Puis pour chaque capteur on déplace dans une étape F les pièges suivant une trajectoire fermée parallèle ou perpendiculaire à XY, parcourue dans un sens par le premier nuage d'atomes ultrafroids et dans le sens opposé par le deuxième nuage d'atomes ultrafroids.

Les étapes B à F s'effectuent en appliquant, selon une séquence prédéterminée, un champs magnétique homogène au voisinage de la puce, des courants continus aux éléments conducteurs et des signaux microonde aux guides d'onde.

L'agencement du groupe d'éléments d'un ou plusieurs éléments conducteurs et ladite séquence prédéterminée sont en outre configurés pour que la trajectoire TR1A associée au premier capteur élémentaire et la trajectoire TR2A associée au deuxième capteur élémentaires soient identiques et parcourues simultanément et en sens inverse par les nuages d'atomes ultrafroids associés à un même état interne.

Dans une étape G on recombine les premier et deuxième états internes en appliquant aux atomes ultrafroids une deuxième impulsion π/2.

Enfin dans une étape H on mesure au moins une première phase *φ*_{*tot_S*1} du premier capteur élémentaire et une deuxième phase *φ*_{*tot_S*2} du deuxième capteur élémentaire, la vitesse de rotation étant déterminée à partir d'une différence entre la première et la deuxième phase.

Selon un mode de réalisation l'étape C comprend l'application de courants continus dans au moins un élément conducteur.

Selon un mode de réalisation l'étape E comprend l'application de signaux micro-onde dans la première paire de guides d'onde. Selon un mode de réalisation l'étape F comprend l'application de signaux microonde dans au moins un guide d'onde de la deuxième paire.

Selon un mode de réalisation l'étape F comprend l'application de courants continus à certains éléments conducteurs.

## Revendications

1. Capteur inertiel à atomes ultrafroids (10) interférométrique de type gyromètre comprenant :
- une puce atomique (ACh) placée dans une enceinte à vide, comportant un plan XY dit plan de mesure normal à un axe Z, et comprenant au moins un ensemble d'un premier et un deuxième capteur élémentaire (SENA, SENB), chaque capteur élémentaire comprenant :
∘ au moins une première paire de guides d'ondes (CPWX1, CPWX2) parallèles en eux et au moins une deuxième paire de guides d'ondes (CPWY'1, CPWY'2) parallèles en eux et sécante avec la première paires,
∘ un groupe d'un ou plusieurs éléments conducteurs,
- un dispositif de génération d'atomes (ACG) configuré pour générer un nuage initial d'atomes ultrafroids associé au premier capteur élémentaire (SENA) et un nuage initial d'atomes ultrafroids associé au deuxième capteur élémentaire (SENB), lesdits nuages initiaux étant localisés près dudit plan XY de ladite puce,
- un générateur (GB) d'un champ magnétique homogène (Bc),
- un dispositif d'alimentation (PSD) comprenant au moins un générateur microonde (GMW) et au moins un générateur de courant continu (GDC), le dispositif d'alimentation étant configuré pour appliquer des signaux microonde auxdits guides d'ondes et des courants continus auxdits éléments conducteurs,
- le générateur de champ magnétique et le dispositif d'alimentation étant configurés par appliquer le champ magnétique, les courants continus et les signaux microondes selon une séquence prédéterminée,
- un agencement dudit groupe d'un ou plusieurs éléments conducteurs et ladite séquence étant configurés, lors de la mise en œuvre de chaque capteur, pour:
i) générer un potentiel initial de piégeage (Vini) dudit nuage initial d'atomes ultrafroids,
ii) séparer spatialement le nuage initial en un premier nuage (CL1A, CL1B) d'atomes ultrafroids dans un premier état interne d'un deuxième nuage (CL2A, CL2B) d'atomes ultrafroids dans un deuxième état interne, en formant respectivement un premier (T1A, T1B) et deuxième (T2A, T2B) pièges à atomes ultrafroids,
iii) et déplacer lesdits pièges suivant une trajectoire fermée parallèle ou perpendiculaire à XY parcourue dans un sens par le premier nuage d'atomes ultrafroids et dans le sens opposé par le deuxième nuage d'atomes ultrafroids,
- l'agencement dudit groupe d'un ou de plusieurs éléments conducteurs de chaque capteur et ladite séquence étant en outre configurés pour que la trajectoire (TR1) associée au premier capteur élémentaire et la trajectoire (TR2) associée au deuxième capteur élémentaire soient identiques et parcourues simultanément et en sens inverse par les nuages d'atomes ultrafroids associés à un même état interne,
- le capteur comprenant en outre un système de détection (SDET) adapté à mesurer au moins une première phase (*φ*_{*tot*_*S*1}) du premier capteur élémentaire et une deuxième phase (*φ*_{*tot*_*S*2}) du deuxième capteur élémentaire, une vitesse de rotation étant déterminée à partir d'une différence entre la première et la deuxième phase.

2. Capteur selon la revendication précédente dans lequel le dispositif d'alimentation (PSD) est en outre configuré pour appliquer des courants continus auxdits guides d'onde.

3. Capteur selon l'une des revendications 1 ou 2 comprenant au moins trois ensembles configurés respectivement pour réaliser une mesure de rotation selon trois axes orthogonaux.

4. Capteur selon l'une des revendications précédentes dans lequel la puce atomique présente une structure matricielle dont les pixels définissent des capteurs élémentaires potentiels, un ensemble comprenant deux pixels de la matrice.

5. Capteur selon la revendication précédente dans lequel des ensembles d'un premier et d'un deuxième capteur élémentaires présentent une paire de guides d'onde en commun ou au moins un élément conducteur en commun.

6. Centrale inertielle comprenant au moins trois capteurs de type gyromètre selon l'une des revendications 4 à 5 configurés pour réaliser respectivement une mesure de vitesse de rotation selon trois axes orthogonaux, la puce atomique matricielle comprenant en outre des pixels configurés pour réaliser au moins une mesure d'horloge et des pixels configurés pour réaliser une mesure d'accélération selon au moins deux axes orthogonaux.

7. Procédé de mesure d'une vitesse de rotation par un capteur inertiel à atomes ultrafroids (10) interférométrique comprenant une puce atomique (ACh) placée dans une enceinte à vide, comportant un plan XY dit plan de mesure normal à un axe Z, et comprenant au moins un ensemble d'un premier et un deuxième capteur élémentaire (SENA, SENB), chaque capteur élémentaire comprenant :
∘ au moins une première paire de guides d'ondes (CPWX1, CPWX2) parallèles en eux et au moins une deuxième paire de guides d'ondes (CPWY'1, CPWY'2) parallèles en eux et sécante avec la première paires,
∘ un groupe d'un ou plusieurs éléments conducteurs,
le procédé comprenant les étapes consistant à :
A. Générer un nuage initial d'atomes ultrafroids associé au premier capteur élémentaire (SENA) et un nuage initial d'atomes ultrafroids associé au deuxième capteur élémentaire (SENB), lesdits nuages initiaux étant localisés près dudit plan XY de ladite puce,
B. Générer un champ magnétique homogène,
C. Générer un potentiel initial de piégeage (Vini) dudit nuage initial d'atomes ultrafroids,
D. Pour chaque capteur initialiser un premier état interne et un deuxième état interne par une première impulsion π / 2
E. Pour chaque capteur séparer spatialement le nuage initial en un premier nuage (CL1A, CL1B) d'atomes ultrafroids dans le premier état interne d'un deuxième nuage (CL2A, CL2B) d'atomes ultrafroids dans le deuxième état interne, en formant respectivement un premier (T1A, T1B) et deuxième (T2A, T2B) pièges à atomes ultrafroids,
F. Pour chaque capteur déplacer lesdits pièges suivant une trajectoire fermée parallèle ou perpendiculaire à XY parcourue dans un sens par le premier nuage d'atomes ultrafroids et dans le sens opposé par le deuxième nuage d'atomes ultrafroids,
les étapes B à F s'effectuant en appliquant, selon une séquence prédéterminée, un champs magnétique homogène, des courants continus auxdits éléments conducteurs et des signaux microonde (I_{MW}) auxdits guides d'onde,
l'agencement dudit groupe d'éléments d'un ou plusieurs éléments conducteurs et ladite séquence prédéterminée étant en outre configurés pour que la trajectoire associée au premier capteur élémentaire (TR1A) et la trajectoire associée au deuxième capteur élémentaires (TR2A) soient identiques et parcourues simultanément et en sens inverse par les nuages d'atomes ultrafroids associés à un même état interne,
G. Recombiner lesdits premier et deuxième états internes en appliquant auxdits atomes ultrafroids une deuxième impulsion π/2,
H. Mesurer au moins une première phase (*φ*_{*tot*_*S*1}) du premier capteur élémentaire et une deuxième phase (*φ*_{*tot_S*2}) du deuxième capteur élémentaire, une vitesse de rotation étant déterminée à partir d'une différence entre la première et la deuxième phase.

8. . Procédé selon la revendication précédente dans lequel l'étape C comprend l'application de courants continus dans au moins un élément conducteur.

9. . Procédé selon l'une des revendications 7 ou 8 dans lequel l'étape E comprend l'application de signaux micro-onde dans la première paire de guides d'onde.

10. . Procédé selon la revendication précédente dans lequel l'étape F comprend l'application de signaux microonde dans au moins un guide d'onde de la deuxième paire.

11. .Procédé selon l'une des revendications 7 à 10 dans lequel l'étape F comprend l'application de courants continus à certains éléments conducteurs.

## Patentansprüche

1. Interferometrischer Inertial-Ultrakaltatomsensor (10) des Gyrometertyps, umfassend:
- ein Atomchip (ACh), das in einem Hohlraum platziert ist, der eine als Messebene bezeichnete XY-Ebene umfasst, die normal zu einer Z-Achse ist, und das mindestens eine Montage aus einem ersten und einem zweiten Elementarsensor (SENA, SENB) umfasst, wobei jeder Elementarsensor Folgendes umfasst:
- mindestens ein erstes Paar Wellenleiter (CPWX1, CPWX2), die parallel zueinander sind, und mindestens ein zweites Paar Wellenleiter (CPWY'1, CPWY'2), die parallel zueinander sind und das erste Paar schneiden,
- eine Gruppe aus einem oder mehreren leitfähigen Elementen,
- eine Atomerzeugungsvorrichtung (ACG), die konfiguriert ist, um eine dem ersten Elementarsensor (SENA) zugeordnete Anfangswolke ultrakalter Atome und eine dem zweiten Elementarsensor (SENB) zugeordnete Anfangswolke ultrakalter Atome zu erzeugen, wobei sich die Anfangswolken in der Nähe der XY-Ebene des Chips befinden,
- einen Generator (GB) eines homogenen Magnetfeldes (Bc),
- eine Versorgungsvorrichtung (PSD), die mindestens einen Mikrowellengenerator (GMW) und mindestens einen Gleichstromgenerator (GDC) umfasst, wobei die Versorgungsvorrichtung konfiguriert ist, um Mikrowellensignale an den Wellenleitern und Gleichströme an den leitfähigen Elementen anzulegen,
- wobei der Magnetfeldgenerator und die Versorgungsvorrichtung konfiguriert sind, um das Magnetfeld, die Gleichströme und die Mikrowellensignale gemäß einer vorbestimmten Reihenfolge anzulegen,
- wobei eine Anordnung der Gruppe aus einem oder mehreren leitfähigen Elementen und die Reihenfolge konfiguriert sind, um beim Einsatz jedes Sensors:
i) ein Anfangseinfangpotenzial (Vini) der Anfangswolke ultrakalter Atome zu erzeugen,
ii) die Anfangswolke in eine erste Wolke (CL1A, CL1B) ultrakalter Atome in einem ersten inneren Zustand von einer zweiten Wolke (CL2A, CL2B) ultrakalter Atome in einem zweiten inneren Zustand räumlich zu trennen, indem jeweils eine erste (T1A, T1B) und eine zweite (T2A, T2B) Falle für ultrakalte Atome gebildet werden,
iii) und die Fallen entlang eines geschlossenen Weges parallel oder senkrecht zu XY zu verschieben, der von der ersten Wolke ultrakalter Atome in einer Richtung zurückgelegt wird und von der zweiten Wolke ultrakalter Atome in der entgegengesetzten Richtung zurückgelegt wird,
- wobei die Anordnung der Gruppe aus einem oder mehreren leitfähigen Elementen jedes Sensors und die Reihenfolge weiter so konfiguriert sind, dass der dem ersten Elementarsensor zugeordnete Weg (TR1) und der dem zweiten Elementarsensor zugeordnet Weg (TR2) identisch sind und von den Wolken ultrakalter Atome, die einem gleichen inneren Zustand zugeordnet sind, gleichzeitig und in entgegengesetzter Richtung zurückgelegt werden,
- wobei der Sensor weiter ein Erfassungssystem (SDET) umfasst, das angepasst ist, um mindestens eine erste Phase (*φ_{tot_S1}* ) des ersten Elementarsensors und eine zweite Phase (*φ_{tot_S2}*) des zweiten Elementarsensors zu messen, wobei eine Drehgeschwindigkeit ausgehend von einer Differenz zwischen der ersten und der zweiten Phase bestimmt wird.

2. Sensor nach dem vorstehenden Anspruch, wobei die Versorgungsvorrichtung (PSD) weiter konfiguriert ist, um Gleichströme an den Wellenleitern anzulegen.

3. Sensor nach einem der Ansprüche 1 oder 2, umfassend mindestens drei Montagen, die jeweils konfiguriert sind, um eine Drehmessung entlang von drei orthogonalen Achsen durchzuführen.

4. Sensor nach einem der vorstehenden Ansprüche, wobei das Atomchip eine Matrixstruktur aufweist, bei der die Pixel potenzielle Elementarsensoren definieren, wobei eine Montage zwei Pixel der Matrix umfasst.

5. Sensor nach dem vorstehenden Anspruch, wobei die Montagen aus einem ersten und einem zweiten Elementarsensor ein gemeinsames Wellenleiterpaar oder mindestens ein gemeinsames leitfähiges Element aufweisen.

6. Inertial-Zentrale, umfassend mindestens drei Sensoren des Gyroskoptyps nach einem der Ansprüche 4 bis 5, die konfiguriert sind, um jeweils eine Messung der Drehgeschwindigkeit entlang von drei orthogonalen Achsen durchzuführen, wobei das Matrizen-Atomchip weiter Pixel umfasst, die konfiguriert sind, um mindestens eine Uhrzeitmessung durchzuführen, und Pixel, die konfiguriert sind, um eine Beschleunigungsmessung entlang von mindestens zwei orthogonalen Achsen durchzuführen.

7. Verfahren zum Messen einer Drehgeschwindigkeit durch einen interferometrischen Inertial-Ultrakaltatomsensor (10), der ein Atomchip (ACh) umfasst, das in einem Hohlraum platziert ist, der eine als Messebene bezeichnete XY-Ebene umfasst, die normal zu einer Z-Achse ist, und das mindestens eine Montage aus einem ersten und einem zweiten Elementarsensor (SENA, SENB) umfasst, wobei jeder Elementarsensor Folgendes umfasst:
- mindestens ein erstes Paar Wellenleiter (CPWX1, CPWX2), die parallel zueinander sind, und mindestens ein zweites Paar Wellenleiter (CPWY'1, CPWY'2), die parallel zueinander sind und das erste Paar schneiden,
- eine Gruppe aus einem oder mehreren leitfähigen Elementen,
wobei das Verfahren die Schritte umfasst, die aus Folgendem bestehen:
A. Erzeugen einer dem ersten Elementarsensor (SENA) zugeordneten Anfangswolke ultrakalter Atome und einer dem zweiten Elementarsensor (SENB) zugeordneten Anfangswolke ultrakalter Atome, wobei sich die Anfangswolken in der Nähe der XY-Ebene des Chips befinden,
B. Erzeugen eines homogenen Magnetfeldes,
C. Erzeugen eines Anfangseinfangpotenzials (Vini) der Anfangswolke ultrakalter Atome,
D. für jeden Sensor, Initialisieren eines ersten inneren Zustands und eines zweiten inneren Zustands durch einen ersten Impuls *π*/2
E. für jeden Sensor, räumliches Trennen der Anfangswolke in eine erste Wolke (CL1A, CL1B) ultrakalter Atome in einem ersten inneren Zustand von einer zweiten Wolke (CL2A, CL2B) ultrakalter Atome in einem zweiten inneren Zustand, indem jeweils eine erste (T1A, T1B) und eine zweite (T2A, T2B) Falle für ultrakalte Atome gebildet werden,
F. für jeden Sensor, Verschieben der Fallen entlang eines geschlossenen Weges parallel oder senkrecht zu XY, der von der ersten Wolke ultrakalter Atome in einer Richtung zurückgelegt wird und von der zweiten Wolke ultrakalter Atome in der entgegengesetzten Richtung zurückgelegt wird,
wobei die Schritte B bis F durchgeführt werden, indem gemäß einer vorbestimmten Reihenfolge ein homogenes Magnetfeld, Gleichströme an die leitfähigen Elemente und Mikrowellensignale (I_{MW}) an die Wellenleiter angelegt werden,
die Anordnung der Gruppe von Elementen aus einem oder mehreren leitfähigen Elementen und die vorbestimmte Reihenfolge weiter so konfiguriert sind, dass der dem ersten Elementarsensor (TRA1A) zugeordnete Weg und der dem zweiten Elementarsensor (TRA2A) zugeordnete Weg identisch sind und von den Wolken ultrakalter Atome, die einem gleichen inneren Zustand zugeordnet sind, gleichzeitig und in entgegengesetzter Richtung zurückgelegt werden,
G. erneutes Kombinieren des ersten und zweiten inneren Zustands durch Anlegen eines zweiten Impulses *π*/2 an den ultrakalten Atomen,
H. Messen mindestens einer ersten Phase (*φ_{tot_S1}* ) des ersten Elementarsensors und einer zweiten Phase (*φ_{tot_S2}*) des zweiten Elementarsensors, wobei eine Drehgeschwindigkeit ausgehend von einer Differenz zwischen der ersten und der zweiten Phase bestimmt wird.

8. Verfahren nach dem vorstehenden Anspruch, wobei der Schritt C das Anlegen von Gleichströmen an mindestens ein leitfähiges Element umfasst.

9. Verfahren nach einem der Ansprüche 7 oder 8, wobei der Schritt E das Anlegen von Mikrowellensignalen an das erste Wellenleiterpaar umfasst.

10. Verfahren nach dem vorstehenden Anspruch, wobei der Schritt F das Anlegen von Mikrowellensignalen an mindestens einen Wellenleiter des zweiten Paars umfasst.

11. Verfahren nach einem der Ansprüche 7 bis 10, wobei der Schritt F das Anlegen von Gleichströmen an gewisse leitfähige Elemente umfasst.

## Claims

1. An interferometric inertial ultracold-atom sensor (10) of gyrometer type, comprising:
- an atom chip (ACh) placed in a vacuum cabinet, comprising an XY-plane, called the measurement plane, normal to a Z-axis, and comprising at least one arrangement of a first and a second elementary sensor (SENA, SENB), each elementary sensor comprising:
- at least one first pair of waveguides (CPWX1, CPWX 2) parallel to each other and at least one second pair of waveguides (CPWY'1 , CPWY'2) parallel to each other and secant with the first pair,
- a group of one or more conductive elements,
- an atom-generating device (ACG) configured to generate an initial cloud of ultracold atoms associated with the first elementary sensor (SENA) and an initial cloud of ultracold atoms associated with the second elementary sensor (SENB), said initial clouds being located close to said XY-plane of said chip,
- a generator (GB) of a uniform magnetic field (Bc),
- a power-supplying device (PSD) comprising at least one microwave generator (GMW) and at least one generator (GDC) of DC current, the power-supplying device being configured to apply microwave signals to said waveguides and DC currents to said conductive elements,
- the magnetic-field generator and the power-supplying device being configured to apply the magnetic field, the DC currents and the microwave signals in a predetermined sequence,
an arrangement of said group of one or more conductive elements and said sequence being configured, during implementation of each sensor, to:
i) generate an initial potential (Vini) for trapping said initial cloud of ultracold atoms,
ii) spatially separate the initial cloud into a first cloud (CL1A, CL1B) of ultracold atoms in a first internal state and a second cloud (CL2A, CL2B) of ultracold atoms in a second internal state, by forming a first ultracold-atom trap (T1A, T1B) and a second ultracold-atom trap (T2A, T2B), respectively,
iii) and move said traps along a closed path parallel or perpendicular to XY, said closed path being traced in one direction by the first cloud of ultracold atoms and in the opposite direction by the second cloud of ultracold atoms,
- the arrangement of said group of one or more conductive elements of each sensor and said sequence further being configured so that the path (TR1) associated with the first elementary sensor and the path (TR2) associated with the second elementary sensor are identical and traced simultaneously and in inverse directions by the clouds of ultracold atoms associated with a given internal state,
- the sensor further comprising a detecting system (SDET) configured to measure at least a first phase (*φ_{tot_S1}* ) of the first elementary sensor and a second phase (*φ_{tot_S2}*) of the second elementary sensor, with a velocity of rotation being determined from a difference between the first and second phases.

2. The sensor according to the preceding claim, wherein the power-supplying device (PSD) is further configured to apply DC currents to said waveguides.

3. The sensor according to any one of claims 1 or 2, comprising at least three arrangements configured to make a measurement of rotation about three orthogonal axes, respectively.

4. The sensor according to any one of the preceding claims, wherein the atom chip has a matrix-array structure, the pixels of which define potential elementary sensors, a arrangement comprising two pixels of the matrix array.

5. The sensor according to the preceding claim, wherein arrangements of a first and second elementary sensor have a pair of waveguides in common or at least one conductive element in common.

6. An inertial measurement unit comprising at least three sensors of gyrometer type according to any one of claims 4 to 5, which sensors are configured to make a measurement of velocity of rotation about three orthogonal axes respectively, the matrix-array atom chip further comprising pixels configured to make at least one clock measurement and pixels configured to make a measurement of acceleration along at least two orthogonal axes.

7. A method for measuring a velocity of rotation using an interferometric inertial ultracold-atom sensor (10) comprising an atom chip (ACh) placed in a vacuum cabinet, comprising an XY-plane, called the measurement plane, normal to a Z-axis, and comprising at least one arrangement of a first and a second elementary sensor (SENA, SENB), each elementary sensor comprising:
- at least one first pair of waveguides (CPWX1, CPWX 2) parallel to each other and at least one second pair of waveguides (CPWY'1 , CPWY'2) parallel to each other and secant with the first pair,
- a group of one or more conductive elements,
the method comprising the steps of:
A.- generating an initial cloud of ultracold atoms associated with the first elementary sensor (SENA) and an initial cloud of ultracold atoms associated with the second elementary sensor (SENB), said initial clouds being located close to said XY-plane of said chip,
B. generating a uniform magnetic field,
C. generating an initial potential (Vini) for trapping said initial cloud of ultracold atoms,
D. for each sensor, initializing a first internal state and a second internal state via a first *π*/2
E. for each sensor, spatially separating the initial cloud into a first cloud (CL1A, CL1B) of ultracold atoms in the first internal state and into a second cloud (CL2A, CL2B) of ultracold atoms in the second internal state, by forming a first ultracold-atom trap (T1A, T1B) and a second ultracold-atom trap (T2A, T2B), respectively,
F. for each sensor, moving said traps along a closed path parallel or perpendicular to XY, said closed path being traced in one direction by the first cloud of ultracold atoms and in the opposite direction by the second cloud of ultracold atoms,
steps B to F being carried out by applying, in a predetermined sequence, a uniform magnetic field, DC currents to said conductive elements and microwave signals (I_{MW}) to said waveguides,
the arrangement of said group of elements of one or more conductive elements and said predetermined sequence further being configured so that the path (TR1A) associated with the first elementary sensor and the path (TR2A) associated with the second elementary sensor are identical and traced simultaneously and in inverse directions by the clouds of ultracold atoms associated with a given internal state,
G. recombining said first and second internal states by applying a second *π*/2 pulse to said ultracold atoms,
H. measuring at least a first phase (*φ_{tot_S1}* ) of the first elementary sensor and a second phase (*φ_{tot_S2}* ) of the second elementary sensor, with a velocity of rotation being determined from a difference between the first and second phases.

8. The method according to the preceding claim, wherein step C comprises applying DC currents to at least one conductive element.

9. The method according to any one of claims 7 or 8, wherein step E comprises applying microwave signals to the first pair of waveguides.

10. The method according to the preceding claim, wherein step F comprises applying microwave signals to at least one waveguide of the second pair.

11. The method according to any one of claims 7 to 10, wherein step F comprises applying DC currents to certain conductive elements.
